(19) Europäisches Patentamt
European Patent Office
Office européen des brevets

(11) EP 1 203 055 B1

(12) **EUROPÄISCHE PATENTSCHRIFT**

(45) Veröffentlichungstag und Bekanntmachung des Hinweises auf die Patenterteilung:
**05.11.2003 Patentblatt 2003/45**

(21) Anmeldenummer: **00958369.1**

(22) Anmeldetag: **03.08.2000**

(51) Int Cl.⁷: **C09B 67/42**, C09B 67/46, C09D 11/00, C08G 65/00, C08G 65/20

(86) Internationale Anmeldenummer:
**PCT/EP00/07500**

(87) Internationale Veröffentlichungsnummer:
**WO 01/012728 (22.02.2001 Gazette 2001/08)**

(54) **FARBMITTELZUBEREITUNGEN**

COLORANT PREPARATIONS

PREPARATIONS DE MATIERES COLORANTES

(84) Benannte Vertragsstaaten:
**AT BE CH CY DE DK ES FI FR GB GR IE IT LI LU MC NL PT SE**

(30) Priorität: **13.08.1999 DE 19938471**
**27.05.2000 DE 10026465**

(43) Veröffentlichungstag der Anmeldung:
**08.05.2002 Patentblatt 2002/19**

(73) Patentinhaber: **BASF AKTIENGESELLSCHAFT**
**67056 Ludwigshafen (DE)**

(72) Erfinder:
- **MIELKE, Manfred**
  **D-69118 Heidelberg (DE)**
- **RAULFS, Friedrich-Wilhelm**
  **D-68161 Mannheim (DE)**
- **SCHLÖSSER, Ulrike**
  **D-67433 Neustadt (DE)**
- **SENS, Rüdiger**
  **D-67069 Ludwigshafen (DE)**
- **SIEMENSMEYER, Karl**
  **D-67227 Frankenthal (DE)**
- **FREYBERG, Dieter**
  **D-67308 Einselthum (DE)**
- **FRECHE, Mike**
  **D-67304 Kerzenheim (DE)**

(56) Entgegenhaltungen:
**WO-A-99/01516** **DE-A- 3 641 677**
**DE-A- 19 515 943** **DE-A- 19 801 462**
**US-A- 5 658 431**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue Tinten für das Ink-Jet-Verfahren, welche

A) 0,01 bis 20 Gew.-% von mindestens ein dispergiertes (A1) oder gelöstes (A2) Farbmittel,

B) im Fall eines Farbmittels (A1) ein Dispergiermittel,

C) ein niedermolekulares Polytetrahydrofuran (C1), gewünschtenfalls im Gemisch mit einem oder mehreren schwerverdampfbaren, in Wasser löslichen oder mit Wasser mischbaren organischen Lösungsmitteln (C2) und

D) Wasser

als wesentliche Bestandteile enthalten.

Weiterhin betrifft die Erfindung die Verwendung dieser Tinten für das Ink-Jet-Verfahren sowie ein Verfahren zum Bedrucken von flächigen oder dreidimensional gestalteten Substraten im Ink-Jet-Verfahren, bei welchem diese Tinten eingesetzt werden.

An die Tinten, die beim Ink-Jet-Verfahren (Tintenstrahldruckverfahren wie Thermal Ink Jet, Piezo Ink Jet, Continuous Ink Jet, Valve Jet) eingesetzt werden, werden eine Reihe von Anforderungen gestellt: Sie müssen zum Drucken geeignete Viskosität und Oberflächenspannung aufweisen, sie müssen lagerstabil sein, d.h., sie sollen nicht koagulieren oder flokulieren, und sie dürfen nicht zur Verstopfung der Druckerdüse führen, was insbesondere bei dispergierte, also nicht gelöste Farbmittelteilchen enthaltenden Tinten problematisch sein kann. Die Anforderungen an die Lagerstabilität dieser Tinten beinhaltet zusätzlich, daß sich die dispergierten Farbmittelteilchen nicht absetzen. Schließlich müssen die Tinten im Falle des Continuous Ink Jet stabil gegen den Zusatz von Leitsalzen sein und bei Erhöhung des Ionengehaltes keine Tendenz zum Ausflocken zeigen. Außerdem müssen die erhaltenen Drucke den koloristischen Anforderungen genügen, d.h. hohe Brillanz und Farbtiefe zeigen, und gute Echtheiten, z.B. Reibechtheit, Lichtechtheit, Wasserechtheit und Naßreibechtheit, und gutes Trocknungsverhalten aufweisen.

Aus der WO-A-99/01516 sind pigmenthaltige Ink-Jet-Tinten bekannt, die sich jedoch von den vorliegenden Farbmittelzubereitungen durch die Komponente (C) unterscheiden.

Aufgabe der vorliegenden Erfindung war es, neue Tinten für das Ink-Jet-Verfahren bereitzustellen, welche vorteilhafte Anwendung im Ink-Jet-Verfahren finden können und insbesondere auch gutes Anschreib- und Dauerschreibverhalten bei gutem Trocknungsverhalten aufweisen.

Demgemäß wurden die eingangs definierten Tinten gefunden.

Die erfindungsgemäßen Tinten können im wesentlichen unlösliches, dispergiertes Farbmittel (A1) (feinteilige, organische oder anorganische Pigmente oder im Wasser/Lösungsmittel-Gemisch unlösliche Farbstoffe) oder gelöstes Farbmittel (A2) (im Wasser/Lösungsmittel-Gemisch lösliche Farbstoffe) enthalten. Selbstverständlich können die erfindungsgemäßen Tinten auch Farbmittelmischungen enthalten, vorzugsweise liegt jedoch nur ein Farbmittel vor. Bevorzugt sind erfindungsgemäße Tinten auf Pigmentbasis. Als Schönungsmittel können diese Pigmentzubereitungen im Farbton dem Pigment ähnliche lösliche Farbstoffe, insbesondere Direkt-, Säure- oder Reaktivfarbstoffe enthalten.

Im folgenden sind Beispiele für geeignete Pigmente (A1) genannt, wobei die Küpenfarbstoffe aufgrund der Überschneidungen mit den organischen Pigmenten mitaufgeführt sind.

Organische Pigmente:

- Monoazopigmente: C.I. Pigment Brown 25;
  C.I. Pigment Orange 5, 13, 36 und 67;
  C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251;
  C.I. Pigment Yellow 1, 3, 73, 74, 65, 97, 151 und 183;

- Disazopigmente: C.I. Pigment Orange 16, 34 und 44;
  C.I. Pigment Red 144, 166, 214 und 242;
  C.I. Pigment Yellow 12, 13, 14, 16, 17, 81, 83, 106, 113, 126, 127, 155, 174, 176 und 188;

- Anthanthronpigmente: C.I. Pigment Red 168 (C.I. Vat Orange 3);

- Anthrachinonpigmente: C.I. Pigment Yellow 147 und 177; C.I. Pigment Violet 31;
- Anthrachinonpigmente: C.I. Pigment Yellow 147 und 177; C.I. Pigment Violet 31;
- Anthrapyrimidinpigmente: C.I. Pigment Yellow 108 (C.I. Vat Yellow 20);
- Chinacridonpigmente: C.I. Pigment Red 122, 202 und 206; C.I. Pigment Violet 19;
- Chinophthalonpigmente: C.I. Pigment Yellow 138;
- Dioxazinpigmente: C.I. Pigment Violet 23 und 37;
  Flavanthronpigmente: C.I. Pigment Yellow 24 (C.I. Vat Yellow 1);
- Indanthronpigmente: C.I. Pigment Blue 60 (C.I. Vat Blue 4) und 64 (C.I. Vat Blue 6);
- Isoindolinpigmente: C.I. Pigment Orange 69; C.I. Pigment Red 260; C.I. Pigment Yellow 139 und 185;
- Isoindolinonpigmente: C.I. Pigment Orange 61; C.I. Pigment Red 257 und 260; C.I. Pigment Yellow 109, 110, 173 und 185;
- Isoviolanthronpigmente: C.I. Pigment Violet 31 (C.I. Vat Violet 1);
- Metallkomplexpigmente: C.I. Pigment Yellow 117, 150 und 153; C.I. Pigment Green 8;
- Perinonpigmente: C.I. Pigment Orange 43 (C.I. Vat Orange 7); C.I. Pigment Red 194 (C.I. Vat Red 15);
- Perylenpigmente: C.I. Pigment Black 31 und 32; C.I. Pigment Red 123, 149, 178, 179 (C.I. Vat Red 23), 190 (C.I. Vat Red 29) und 224; C.I. Pigment Violet 29;
- Phthalocyaninpigmente: C.I. Pigment Blue 15, 15:1, 15:2, 15:3, 15:4, 15:6 und 16; C.I. Pigment Green 7 und 36;
- Pyranthronpigmente: C.I. Pigment Orange 51; C.I. Pigment Red 216 (C.I. Vat Orange 4);
- Thioindigopigmente: C.I. Pigment Red 88 und 181 (C.I. Vat Red 1); C.I. Pigment Violet 38 (C.I. Vat Violet 3);

- Triarylcarboniumpigmente: C.I. Pigment Blue 1, 61 und 62;
  C.I. Pigment Green 1;
  C.I. Pigment Red 81, 81:1 und 169;
  C.I. Pigment Violet 1, 2, 3 und 27
- C.I. Pigment Black 1 (Anilinschwarz);
- C.I. Pigment Yellow 101 (Aldazingelb) ;
- C.I. Pigment Brown 22;

Küpenfarbstoffe (außer den bereits oben genannten) :

- C.I. Vat Yellow 2, 3, 4, 5, 9, 10, 12, 22, 26, 33, 37, 46, 48, 49 und 50;
- C.I. Vat Orange 1, 2, 5, 9, 11, 13, 15, 19, 26, 29, 30 und 31;
- C.I. Vat Red 2, 10, 12, 13, 14, 16, 19, 21, 31, 32, 37, 41, 51, 52 und 61;
- C.I. Vat Violet 2, 9, 13, 14, 15, 17 und 21;
- C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
- C.I. Vat Green 1, 2, 3, 5, 7, 8, 9, 13, 14, 17, 26, 29, 30, 31, 32, 33, 40, 42, 43, 44 und 49;
- C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84;
- C.I. Vat Black 1, 2, 7, 8, 9, 13, 14, 16, 19, 20, 22, 25, 27, 28, 29, 30, 31, 32, 34, 36, 56, 57, 58, 63, 64 und 65;

anorganische Pigmente:

- Weißpigmente: Titandioxid (C.I. Pigment White 6), Zink-weiß, Farbenzinkoxid; Zinksulfid, Lithopone; Bleiweiß;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente: Chromoxid, Chromoxidhydratgrün; chromgrün (C.I. Pigment Green 48); Cobaltgrün (C.I. Pigment Green 50); Ultramaringrün;
  Kobaltblau (C.I. Pigment Blue 28 und 36); Ultramarinblau; Eisenblau (C.I. Pigment Blue 27); Manganblau; Ultramarinviolett; Kobalt- und Manganviolett;
  Eisenoxidrot (C.I. Pigment Red 101); Cadmiumsulfoselenid (C.I. Pigment Red 108); Molybdatrot (C.I. Pigment Red 104); Ultramarinrot; Eisenoxidbraun, Mischbraun, Spinellund Korundphasen (C.I. Pigment Brown 24, 29 und 31), Chromorange;
  Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- Interferenzpigmente: Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente und Ruße zu nennen.

Beispiele für besonders bevorzugte Pigmente sind im einzelnen: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7.

Diese Pigmente können vorteilhaft zur Erstellung von Ink-Jet-Tintensets auf Basis der erfindungsgemäßen Farbmittelzubereitungen eingesetzt werden. Der Gehalt der einzelnen Tinten an den jeweiligen Pigmenten ist dabei an die jeweiligen Erfordernisse (z.B. Trichromie) anzupassen.

Folgende Pigmentkombinationen sind besonders zu empfehlen:

- C.I. Pigment Yellow 138, C.I. Pigment Violet 19, C.I. Pigment Blue 15:3 und C.I. Pigment Black 7;
- C.I. Pigment Yellow 138, C.I. Pigment Red 122, C.I. Pigment Blue 15:3 oder 15:4 und C.I. Pigment Black 7;
- C.I. Pigment Yellow 138, C.I. Pigment Violet 19, C.I. Pigment Blue 15:3, C.I. Pigment Black 7, C.I. Pigment Orange 43 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 5 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 38 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 43 und C.I. Pigment Green 7.

Als Farbstoffe (A1), die im Wasser/Lösungsmittel-Gemisch im wesentlichen unlöslich sind, eignen sich neben den bereits genannten Küpenfarbstoffen insbesondere Azo-, Anthrachinon-, Chinophthalon-, Benzodifuran-, Methin- und Azamethinfarbstoffe, die frei von sauren bzw. ionischen Gruppen sind.

Beispiele für geeignete Farbstoffe (A1) sind im einzelnen:

- C.I. Disperse Yellow 1, 2, 3, 4, 5, 6, 7, 8, 9, 10, 11, 11:1, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 179, 180, 181, 182, 183, 184, 184:1, 200, 201, 202, 203, 204, 205, 206, 207, 208, 209, 210, 211, 212, 213, 214, 215, 216, 217, 218, 219, 220, 221, 222, 223, 224, 225, 226, 227 und 228;
- C.I.Disperse Orange 1, 2, 3, 3:3, 4, 5, 6, 7, 8, 9, 10, 11, 12, 13, 14, 15, 16, 17, 18, 19, 20, 21, 22, 23, 24, 25, 25:1, 26, 27, 28, 29, 30, 31, 32, 33, 34, 35, 36, 37, 38, 39, 40, 41, 41:1, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 126, 127, 128, 129, 130, 131, 136, 137, 138, 139, 140, 141, 142, 143, 145, 146, 147 und 148;
- C.I. Disperse Red 1, 2, 3, 4, 5, 5:1, 6, 7, 8, 9, 10, 11, 12, 13, 14, 15, 16, 17, 18, 19, 20, 21, 22, 23, 24, 25, 26, 27, 28, 29, 30, 30:1, 31, 32, 33, 34, 35, 36, 38, 39, 40, 41, 43, 43:1, 46, 48, 50, 51, 52, 53, 54, 55, 55:1, 56, 58, 59, 60, 61, 63, 65, 66, 69, 70, 72, 73, 74, 75, 76, 77, 79, 80, 81, 82, 84, 85, 86, 86:1, 87, 88, 89, 90, 91, 92, 93, 94, 96, 97, 98, 100, 102, 103, 104, 105, 106, 107, 108, 109, 110, 111, 112, 113, 115, 116, 117, 118, 120, 121, 122, 123, 125, 126, 127, 128, 129, 130, 131, 132, 133, 134, 135, 136, 137, 138, 139, 140, 141, 142, 143, 144, 145, 146, 147, 148, 149, 150, 151, 151:1, 152, 153, 154, 155, 156, 157, 158, 159, 160, 161, 162, 163, 164, 165, 166, 167, 167:1, 168, 169, 170, 171, 172, 173, 174, 175, 176, 177, 178, 179, 180, 181, 182, 183, 184, 185, 186, 187, 188, 189, 190, 190:1, 191, 191:1, 192, 193, 194, 195, 211, 223, 273, 274, 275, 276, 277, 278, 279, 280, 281, 302:1, 305, 306, 307, 308, 309, 310, 311, 312, 313, 314, 315, 316, 317, 318, 319, 320, 321, 322, 323, 324, 325, 326, 327, 328, 329, 330, 331, 332, 333, 334, 335, 336, 338, 339, 340, 341, 342, 343, 344, 346, 347, 348, 349, 356 und 367;
- C.I. Disperse Violet 1, 2, 3, 4, 4:1, 5, 6, 7, 8, 9, 10, 11, 12, 13, 14, 15, 16, 17, 18, 19, 20, 21, 22, 23, 24, 25, 26, 27, 28, 29, 31, 33, 34, 35, 36, 37, 38, 39, 40, 41, 42, 43, 44, 45, 46, 47, 48, 49, 50, 51, 52, 53, 54, 55, 56, 57, 58, 59, 60, 70, 81, 86, 87, 88, 89, 91, 92, 93, 94, 96 und 97;

- C.I. Disperse Blue 1, 1:1, 2, 3, 3:1, 4, 5, 6, 7, 7:1, 8, 9, 10, 11, 12, 13, 13:1, 14, 15, 16, 17, 18, 19, 20, 21, 22, 23, 23:1, 24, 25, 26, 27, 28, 29, 30, 31, 32, 33, 34, 35, 36, 38, 39, 40, 42, 43, 44, 45, 47, 48, 49, 51, 52, 53, 54, 55, 56, 58, 60, 60:1, 61, 62, 63, 64, 64:1, 65, 66, 68, 70, 72, 73, 75, 76, 77, 79, 80, 81, 81:1, 82, 83, 84, 85, 86, 87, 88, 89, 90, 91, 92, 93, 94, 95, 96, 97, 98, 99, 100, 101, 102, 103, 104, 105, 106, 107, 108, 109, 111, 112, 113, 114, 115, 116, 117, 118, 119, 121, 122, 123, 124, 125, 126, 127, 128, 130, 131, 132, 133, 134, 136, 137, 138, 139, 140, 141, 142, 143, 144, 145, 146, 147, 148, 149, 150, 151, 152, 153, 154, 155, 156, 158, 159, 160, 161, 162, 163, 164, 165, 165:2, 166, 167, 168, 169, 170, 171, 172, 173, 174, 175, 195, 281, 282, 283, 283:1, 284, 285, 286, 287, 288, 289, 290, 291, 292, 293, 294, 316, 317, 318, 319, 320, 321, 322, 323, 324, 325, 326, 327, 328, 329, 330, 331, 332, 333, 334, 335, 336, 337, 338, 339, 340, 341, 342, 343, 344, 345, 346, 347 und 349;

- C.I. Disperse Green 1, 2, 5, 6 und 9;

- C.I. Disperse Brown 1, 2, 3, 4, 4:1, 5, 7, 8, 9, 10, 11, 18, 19, 20 und 21;

- C.I. Disperse Black 1, 3, 4, 5, 6, 7, 8, 9, 10, 11, 12, 13, 14, 15, 20, 22, 24, 25, 26, 27, 28, 29, 29:1, 30, 31, 32, 33, 34 und 36;

- C.I. Solvent Yellow 2, 3, 7, 12, 13, 14, 16, 18, 19, 21, 25, 25:1, 27, 28, 29, 30, 33, 34, 36, 42, 43, 44, 47, 56, 62, 72, 73, 77, 79, 81, 82, 83, 83:1, 88, 89, 90, 93, 94, 96, 98, 104, 107, 114, 116, 117, 124, 130, 131, 133, 135, 141, 143, 144, 145, 146, 157, 160:1, 161, 162, 163, 167, 169, 172, 173, 176, 179, 180, 181, 182, 183, 184, 185, 186, 187, 189, 190 und 191;

- C.I. Solvent Orange 1, 2, 3, 4, 5, 7, 11, 14, 20, 23, 25, 31A, 40:1, 41, 45, 54, 56, 58, 60, 62, 63, 70, 75, 77, 80, 81, 86, 99, 102, 103, 105, 106, 107, 108, 109, 110, 111, 112 und 113;

- C.I. Solvent Red 1, 2, 3, 4, 8, 16, 17, 18, 19, 23, 24, 25, 26, 27, 30, 33, 35, 41, 42, 45, 48, 49, 52, 68, 69, 72, 73, 83:1, 84:1, 89, 90, 90:1, 91, 92, 106, 109, 111, 118, 119, 122, 124, 125, 127, 130, 132, 135, 141, 143, 145, 146, 149, 150, 151, 155, 160, 161, 164, 164:1, 165, 166, 168, 169, 172, 175, 179, 180, 181, 182, 195, 196, 197, 198, 207, 208, 210, 212, 214, 215, 218, 222, 223, 225, 227, 229, 230, 233, 234, 235, 236, 238, 239, 240, 241, 242, 243, 244, 245, 247 und 248;

- C.I. Solvent Violet 2, 8, 9, 11, 13, 14, 21, 21:1, 26, 31, 36, 37, 38, 45, 46, 47, 48, 49, 50, 51, 55, 56, 57, 58, 59, 60 und 61;

- C.I. Solvent Blue 2, 3, 4, 5, 7, 18, 25, 26, 35, 36, 37, 38, 43, 44, 45, 48, 51, 58, 59, 59:1, 63, 64, 67, 68, 69, 70, 78, 79, 83, 94, 97, 98, 99, 100, 101, 102, 104, 105, 111, 112, 122, 124, 128, 129, 132, 136, 137, 138, 139 und 143;

- C.I. Solvent Green 1, 3, 4, 5, 7, 28, 29, 32, 33, 34 und 35;

- C.I. Solvent Brown 1, 3, 4, 5, 12, 20, 22, 28, 38, 41, 42, 43, 44, 52, 53, 59, 60, 61, 62 und 63;

- C.I. Solvent Black 3, 5, 5:2, 7, 13, 22, 22:1, 26, 27, 28, 29, 34, 35, 43, 45, 46, 48, 49 und 50.

Darüber hinaus eignen sich substituierte Benzdifuranonfarbstoffe, deren Grundkörper der Formel

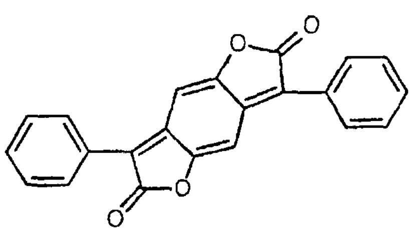

entspricht. Solche Farbstoffe können an einem oder beiden Phenylringen substituiert sein. Als Substituenten kommen Halogen, Alkyl, das gegebenenfalls durch nicht benachbarte Sauerstoffatome unterbrochen ist, Alkoxy, dessen Alkylrest durch Sauerstoffatome unterbrochen sein kann und darüber hinaus substituiert sein kann, Hydroxy, gegebenenfalls substituiertes Amino, Cyano, Nitro und Alkoxycarbonyl in Betracht.

Ferner sind Farbstoffe der folgenden Formeln geeignet:

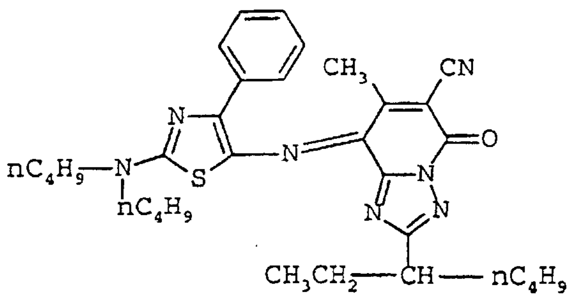

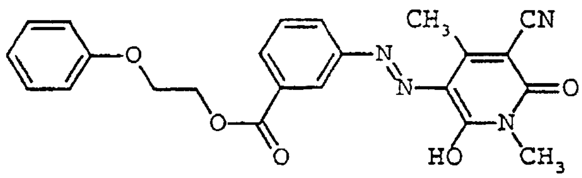

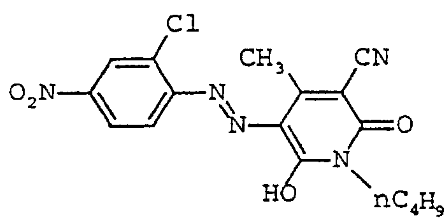

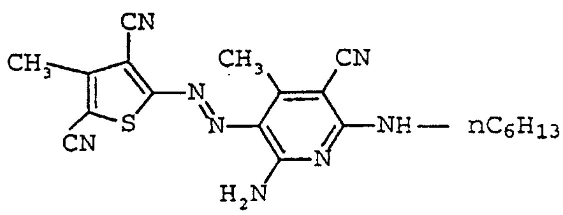

Weitere Beispiele für unlösliche Farbstoffe (A1 sind in den WO-A-97/46623, 98/24850 und 99/29783 aufgeführt.

Das ungelöste, dispergierte Farbmittel (A1) sollte möglichst feinteilig sein. Bevorzugt haben 95%, besonders bevorzugt 99%, der Farbmittelteilchen (A1) eine Teilchengröße ≤ 1 µm, vorzugsweise ≤ 0,5 µm.

Als Farbstoffe (A2), die im Wasser/Lösungsmittel-Gemisch löslich sind, eignen sich insbesondere Arylmethan-, Azo-, Methin-, Rhodamin- und Metallkomplexfarbstoffe, die saure bzw. ionische Gruppen enthalten.

Beispiele für geeignete Farbstoffe (A2) sind im einzelnen:

- C.I. Basic Yellow 2, 37, 78, 94, 96, 97, 98, 102 und 111;
- C.I. Basic Orange 2, 60, 62 und 63;
- C.I. Basic Red 1, 14, 49, 108 und 111;
- C.I. Basic Violet 1, 3, 4, 10, 11, 49 und 50;
- C.I. Basic Blue 26, 152, 157, 158 und 161;
- C.I. Basic Green 1 und 4;
- C.I. Basic Brown 1;
- C.I. Acid Orange 7 und 8;

- C.I. Acid Blue 9;
- C.I. Direct Yellow 4, 5, 11, 15, 127, 131 und 147;
- C.I. Direct Red 239 und 254;
- C.I. Direct Blue 161, 199, 279 und 281;
- C.I. Reactive Red 120.

Die erfindungsgemäßen Tinten enthalten 0,01 bis 20 Gew.-°%, bevorzugt 0,2 bis 10 Gew. -%, besonders bevorzugt 1 bis 6 Gew.-%, Farbmittel (A), wobei für Farbmittel (A1) Mengen im Bereich von 1 bis 6 Gew.-% und für Farbmittel (A2) Mengen im Bereich von 1 bis 10 Gew.-% besonders geeignet sind.

Basieren die erfindungsgemäßen Tinte auf ungelösten Farbmitteln (A1), dann enthalten sie ein Dispergiermittel (B). Im Fall von gelösten Farbmitteln (A2), ist die Komponente (B) selbstverständlich nicht erforderlich.

Als Komponente (B) eignen sich im Prinzip alle für wäßrige Systeme bekannten Dispergiermittel.

Besonders geeignet sind wasserlösliche Dispergiermittel auf der Basis eines oder mehrerer wasserlöslicher oxalkylierter Phenole (B1), eines oder mehrerer Arylsulfonsäure-Formaldehyd-Kondensationsprodukte (B2), eines oder mehrerer Kondensationsprodukte eines mindestens difunktionellen Isocyanats mit jeweils eine isocyanatreaktive Gruppen tragenden Verbindungen (B3), eines oder mehrerer alkoxylierter Hydroxynaphthaline (B4) oder eines oder mehrerer Alkoxylierungsprodukte mindestens bifunktioneller aliphatischer oder aromatischer Amine mit bis zu 8 Kohlenstoffatomen (B5).

Als Dispergiermittel (B1 sind oxalkylierte Phenole der Formel I bzw. II der Formel I oder II

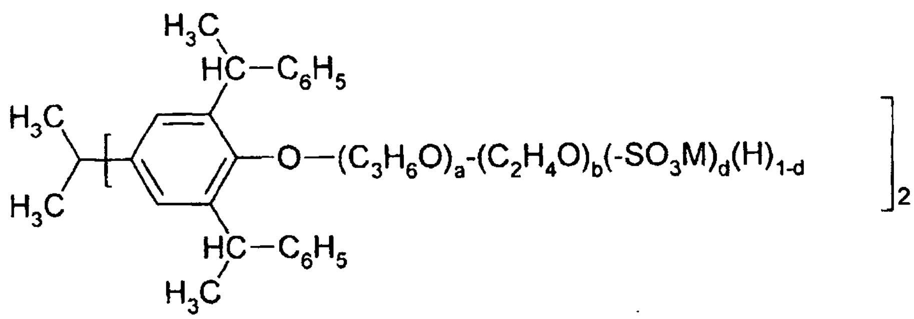

(I)

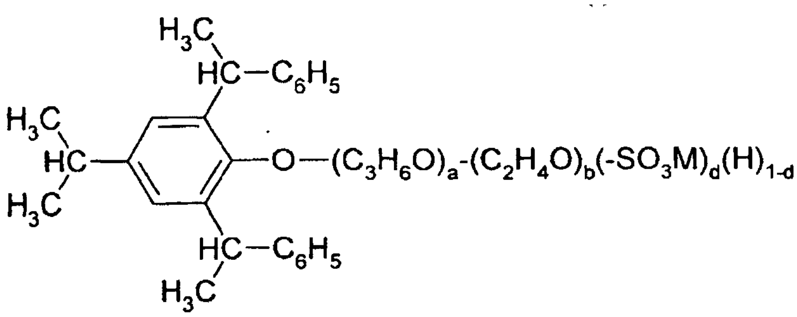

(II)

worin

M Alkalimetall, beispielsweise Na oder K,

a 0 bis im Mittel 125

b im Mittel 37 bis 250, wobei im Falle b>37 das Verhältnis b:a mindestens 1:1 ist

d 0 oder 1 bedeuten

oder deren Gemische bevorzugt.

Die Produkte der Formel I und II können durch Umsetzen der Phenolderivate der Formel III oder IV

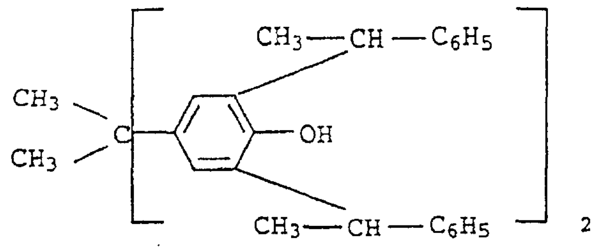

(III)

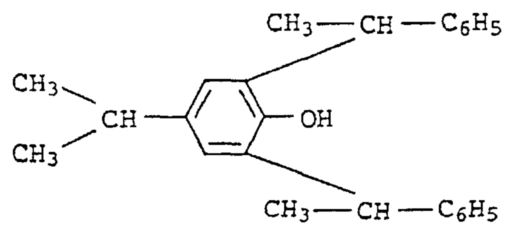

(IV)

mit Propylenoxid und folgender Umsetzung des Adduktes mit Ethylenoxid oder durch Umsetzen von III und/oder IV mit Ethylenoxid erhalten werden. Gegebenenfalls werden die Addukte mit Chlorsulfonsäure oder Schwefeltrioxid vollständig oder partiell zu Schwefelsäurehalbester umgesetzt und die erhaltenen Halbester mit alkalisch wirkenden Mitteln neutral gestellt.

Die Phenole der Formel III und IV können durch Umsetzen von Phenol oder 2,2-(p,p'-Bishydroxydiphenyl) propan mit 3 oder 4 mol Styrol in Gegenwart von Säure als Katalysator erhalten werden. Die Phenole III und IV werden nach bekannten Verfahren zuerst mit Ethylenoxid oder nur mit Ethylenoxid in Gegenwart von sauer oder alkalisch wirkenden Katalysatoren zu den entsprechenden Oxalkylierungsprodukten I und II mit d=0 umgesetzt. Die Oxalkylierung kann z.B. nach dem in der US-A-2 979 528 beschriebenen Verfahren erfolgen. Für den Fall b > 37 muß der Quotient

$$\frac{b}{a} > 1 \text{ sein.}$$

Die Schwefelsäurehalbester werden durch Reaktion der Oxalkylierungsprodukte mit Chlorsulfonsäure oder Schwefeltrioxid hergestellt, wobei die Menge so gewählt werden kann, daß alle freien Hydroxygruppen oder nur ein Teil sulfatiert wird. Im letzteren Falle entstehen Gemische aus Verbindungen der Formel I und II, die freie und sulfatierte Hydroxygruppen enthalten. Zur Verwendung als Dispergiermittel werden die bei der Umsetzung erhaltenen Halbester der Schwefelsäure in wasserlösliche Salze überführt. Als solche kommen vorteilhaft die Alkalimetallsalze, z.B. die Natrium- oder Kaliumsalze, in Betracht. Dabei sind im Falle von Chlorsulfonsäure zwei Äquivalente, bei Schwefeltrioxid ein Äquivalent basisch wirkender Verbindungen erforderlich. Als letztere verwendet man zweckmäßigerweise wäßriges Alkalimetallhydroxid. Bei der Neutralisation sollte die Temperatur 70°C nicht überschreiten. Die erhaltenen Salze können in Form von wäßrigen Lösungen oder auch als solche isoliert und in fester Form verwendet werden.

Bevorzugt sind Dispergiermittel (B1), bei denen a 0 bis im Mittel 2,5, b im Mittel 37 bis 250 und d 0 bis im Mittel 0,5 ist. Besonders bevorzugt sind Dispergiermittel (B1), bei denen a 0 bis im Mittel 2,5, b im Mittel 50 bis 100 und d im Mittel 0,5 ist.

Die Dispergiermittel (B1) sind bekannt und z.B. in der US-A-4 218 218 beschrieben.

Die Kondensationsprodukte (B2) sind durch Sulfonieren aromatischer Verbindungen wie Naphthalin selbst oder Naphthalin enthaltender Gemische und anschließendes Kondensieren der gebildeten Arylsulfonsäuren mit Formaldehyd erhältlich.

Als Ausgangsprodukt für die Herstellung der Arylsulfonsäuren kommt z.B. ein Gemisch solcher aromatischer Verbindungen in Betracht, die durch thermische Spaltung eines naphthenischen Rückstandsöls und Fraktionieren der Spaltprodukte erhältlich sind. Die naphthenischen Rückstandsöle fallen beispielsweise beim Crakken von Leichtbenzin an und werden auch als hochsiedende aromatische Kohlenwasserstofföle bezeichnet. Das naphthenische Rückstandsöl wird vorzugsweise bei einer Temperatur von 1400 bis 1700°C thermisch gespalten. Die Spaltprodukte werden dann einer fraktionierenden Destillation zugeführt. Die bei Normaldruck (1013 mbar) von 100 bis 120°C übergehende Fraktion wird gesammelt und als aromatische Verbindung der Sulfonierung zugeführt. Eine solche Fraktion wird bei dem bekannten Acetylen-Öl-Quench-Prozeß üblicherweise als Nebenprodukt erhalten (Ullmann's Encyclopedia of Industrial Chemistry, VCH Verlagsgesellschaft mbH, Weinheim, 1985, Volume A1, Seiten 107 bis 112).

Diese Aromatenfraktion besteht aus einer Mischung vieler aromatischer Substanzen, deren Struktur und Menge praktisch nicht im einzelnen ermittelt werden kann. Folgende Arylverbindungen sind die hauptsächlichsten Vertreter dieser Aromatenfraktion:

| | Gew.-% in der Aromatenfraktion |
|---|---|
| Naphthalin | 30 - 55 |
| 2-Methylnaphthalin | 5 - 15 |
| 1-Methylnaphthalin | 4 - 10 |
| Inden | 3 - 10 |
| Diphenyl | 1 - 5 |
| Methylinden | 1 - 5 |
| Acenaphthen | 1 - 4 |

Die Aromatenfraktion enthält außerdem an identifizierten Bestandteilen in Mengen von 0,1 bis etwa 2 Gew.% folgende Arylverbindungen: Fluoren, Indan, Methylstyrol, Phenanthren, Methylindan, Dimethylnaphthalin, Ethylnaphthalin, Xylole, Tetralin, Styrol, Methylethylbenzol, Anthracen, Fluoranthren, Pyren, Acetnaphthylen und Toluol.

Besonders geeignete Arylsulfonsäuren enthalten in der Regel a-und b-Naphthalinsulfonsäuren, wobei das Verhältnis der a- zu den b-Isomeren üblicherweise 20:1 bis 1:8, insbesondere 10:1 bis 1:5 beträgt.

Die Kondensationsprodukte weisen bei Verwendung der o.g. Aromatenfraktion bevorzugt einen Sulfonsäuregruppengehalt von maximal 40 Gew.-% auf.

Die Herstellung des Dispergiermittels (B2) kann in Gegenwart von aromatischen oder langkettigen aliphatischen Carbonsäuren, deren Salzen, Anhydriden oder Mischungen dieser Verbindungen vorgenommen werden.

Beispiele für geeignete aromatische Carbonsäuren oder deren Derivate sind Naphthalincarbonsäure, Naphthalsäure, Terephthalsäure, Isophthalsäure, Benzoesäure, Trimellitsäure, Phenylessigsäure, Phenoxyessigsäure, Salicylsäure, p-Hydroxybenzoesäure, Diphenylessigsäure, m-Hydroxybenzoesäure, Benzoltetracarbonsäure oder Säureanhydride wie Phthalsäureanhydrid, Trimellitsäureanhydrid, Benzol-1,2,4,5-tetracarbonsäuredianhydrid oder Naphthalsäureanhydrid.

Geeignete langkettige aliphatische Carbonsäuren sind insbesondere gesättigte oder olefinisch ungesättigte, lineare oder verzweigte aliphatische Monocarbonsäuren mit 8 bis 22, vorzugsweise 8 bis 18 Kohlenstoffatomen, natürlichen oder synthetischen Ursprungs, beispielsweise höhere Fettsäuren wie Caprylsäure, Caprinsäure, Laurinsäure, Myristinsäure, Palmitinsäure, Stearinsäure, Ölsäure, Linolsäure oder Linolensäure oder synthetisch hergestellte Carbonsäuren wie 2-Ethylhexansäure, Isononansäure oder Isotridecansäure.

Als Salze der genannten Carbonsäuren kommen die Alkali-, Ammonium- oder Erdalkalisalze in Betracht, die beispielsweise durch Neutralisation dieser Carbonsäuren mit Natronlauge, Kalilauge, Lithiumhydroxid, Soda, Magnesiumcarbonat, Calciumoxid, Calciumhydroxid, Ammoniak oder Alkanolaminen wie Ethanolamin, Diethanolamin oder Triethanolamin erhältlich sind.

Bevorzugt sind Natriumbenzoat, Natriumphenylacetat, Natriumsalicylat, Natrium-4-hydroxybenzoat, Natriumterephthalat, Natrium-2-hydroxy-3-naphthalincarboxylat, Naphthalin-1-carbonsäure, Phthalsäureanhydrid oder Benzoesäure.

Als Dispergiermittel (B2) eignen sich in diesem Fall vor allem solche Gemische, die 50 bis 97 Gew.-%, insbesondere 70 bis 95 Gew.-%, Arylsulfonsäure-Formaldehyd-Kondensationsprodukte und 3 bis 50 Gew.-%, insbesondere 5 bis 30 Gew.-%, aromatische oder langkettige aliphatische Carbonsäuren, deren Salze oder deren Anhydride oder Mischungen davon enthalten.

Vorteilhaft kann man bei der Herstellung der Arylsulfonsäure-Formaldehyd-Kondensationsprodukte (B2) auch von reinem Naphthalin (Reingehalt in der Regel > 95%) ausgehen.

Bei der Kondensation werden im allgemeinen 0,5 bis 1,5 mol, vorzugsweise 0,7 bis 1 mol, Formaldehyd je mol Naphthalin eingesetzt.

Der Sulfonsäuregruppengehalt dieser Kondensationsprodukte liegt zweckmäßigerweise bei etwa 40 bis 50 Gew.-%.

Die Dispergiermittel (B2) sind bekannt und z.B. in der US-A-5 186 846, der DE-A-11 37 005 oder der EP-A-380 778 beschrieben.

Die Dispergiermittel (B3) stellen Kondensationsprodukte von mindestens difunktionellen Isocyanaten, die als Verknüpfungsstelle dienen, mit einer polymeren Verbindung, die an einem Kettenende mit einer isocyanatreaktiven Gruppe terminiert ist und die zu dispergierenden Feststoffteilchen mit dem Dispersionsmedium verträglich macht (im folgenden "Stabilisatorblock" genannt), und einem (Homo- oder Co-)Polymer eines stickstoffhaltigen Monomers oder einem Phosphonsäureester, die jeweils über eine isocycanatreaktive Gruppe verfügen und sich an die zu dispergierenden Feststoffteilchen anlagern (im folgenden "Ankergruppenblock" genannt), dar.

Das die Verknüpfung von Stabilisatorblock und Ankergruppenblock bewirkende Isocyanat ist ein Diisocyanat oder ein hoher funktionelles Polyisocyanat mit einer mittleren NCO-Funktionalität von 2,0 bis 4,5.

Die Diisocyanate können aromatisch oder aliphatisch sein, bevorzugt sind aliphatische Diisocyanate wie Tetramethylendiisocyanat, Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethylhexandiisocyanat, 1,4-, 1,3- oder 1,2-Diisocyanatocyclohexan, 4,4'-Di(isocyanatocyclohexyl)methan, 1-Isocyanato-3, 3, 5-trimethyl-5-(isocyanatomethyl)cyclohexan(isophorondiisocyanat) und 2,4- und 2,6-Diisocyanato-1-methylcyclohexan, wobei Hexamethylendiisocyanat und Isophorondiisocyanat besonders bevorzugt sind.

Die höher funktionellen Polyisocyanate können ebenfalls aromatisch oder aliphatisch sein. Auch hier sind die aliphatischen Polyisocyanate bevorzugt, vor allem solche mit einer mittleren NCO-Funktionalität von 1,7 bis 5, insbesondere etwa 3. Beispielhaft seien folgende Gruppen genannt:

(a) Isocyanuratgruppen aufweisende Polyisocyanate von aliphatischen und/oder cycloaliphatischen Diisocyanaten. Besonders bevorzugt sind hierbei die entsprechenden Isocyanato-Isocyanurate auf Basis von Hexamethylendiisocyanat und Isophorondiisocyanat. Bei diesen Isocyanuraten handelt es sich insbesondere um einfache Tris-isocyanatoalkyl- bzw. Triisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-%, und eine mittlere NCO-Funktionalität von 2,6 bis 4,5.

(b) Uretdiondiisocyanate mit aliphatisch und/oder cycloaliphatisch gebundenen Isocyanatgruppen, die sich vorzugsweise von Hexamethylendiisocyanat oder Isophorondiisocyanat ableiten. Bei Uretdiondiisocyanaten handelt es sich um cyclische Dimerrisierungsprodukte von Diisocyanaten.

(c) Biuretgruppen aufweisende Polyisocyanate mit aliphatisch gebundenen Isocyanatgruppen, insbesondere Tris (6-isocyanatohexyl)biuret oder dessen Gemische mit seinen höheren Homologen. Diese Biuretgruppen aufweisenden Polyisocyanate haben im allgemeinen einen NCO-Gehalt von 18 bis 25 Gew.-% und eine mittlere NCO-Funktionalität von 3 bis 4,5.

(d) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit einfachen mehrwertigen Alkoholen, wie Trimethylolpropan, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.

(e) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.

(f) Uretonimin-modifizierte Polyisocyanate.

Bei der den Stabilisatorblock bildenden polymeren Verbindung handelt es sich vorzugsweise um eine polymere Verbindung der allgemeinen Formel V

$$R^1\text{-}M_n\text{-}XH \qquad \text{(V)}$$

worin

$R^1$ für Wasserstoff, gegebenenfalls verzweigtes $C_1$-$C_{28}$-Alkyl, gegebenenfalls verzweigtes, gegebenenfalls mehrfach ungesättigtes $C_2$-$C_{28}$-Alkenyl, gegebenenfalls verzweigtes, gegebenenfalls mehrfach ungesättigtes $C_2$-$C_{28}$-Alkinyl oder den Rest eines Polymerisationsinitiators oder eines Kettenreglers steht,

M für gleiche oder verschiedene einpolymerisierte Einheiten von Monomeren, ausgewählt unter a,b-ethylenisch ungesättigten Mono- oder Dicarbonsäuren, gegebenenfalls mit Hydroxy, $C_1$-$C_6$-Alkoxy, Polyalkylenoxy oder Halogen ein- oder mehrfach substituierten $C_1$-$C_{20}$-(Cyclo) alkyl- oder $C_7$-$C_{20}$-Aralkylestern, Amiden, Nitrilen oder Anhydriden von a,b-ethylenisch ungesättigten Mono- oder Dicarbonsäuren, Vinyl- oder Allylestern aliphatischer oder aromatischer Carbonsäuren, Vinyl- oder Allylethern, ethylenisch ungesättigten Sulfonsäuren oder Sulfonsäurederivaten, gegebenenfalls halogenierten ethylenisch ungesättigten aliphatischen $C_2$-$C_{20}$-Kohlenwasserstoffen, aromatischen ethylenisch ungesättigten Verbindungen oder zu Polyphosphacenen polymerisierbaren Verbindungen, oder für

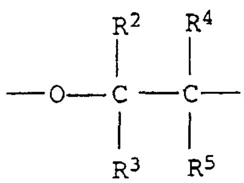 ,

-O-CO-$R^6$-, -CO-O-$R^6$- oder -CO-O-$R^7$-O-CO-$R^8$-
steht, worin $R^2$, $R^3$, $R^4$ und $R^5$ unabhängig voneinander für H, $C_1$-$C_6$-Alkyl, $C_6$-$C_{20}$-Aryl, -$CH_2$-Cl oder -$CH_2$-OH stehen, und $R^6$, $R^7$ und $R^8$ unabhängig voneinander für eine $C_2$-$C_{20}$-Alkylen-, Arylen oder Aralkylengruppe stehen,

n für eine ganze Zahl zwischen 0 und 10000 steht, wobei n vorzugsweise $\geq 2$, insbesondere $\geq 3$ und besonders bevorzugt 30 bis 1000 ist, und

X für COO, O, S oder $NR^9$ steht, worin $R^9$ für H oder eine $C_1$-$C_6$-Alkylgruppe steht.

Bevorzugt werden zum Aufbau der polymeren Verbindung V $C_1$-$C_8$-Alkyl(meth)acrylate eingesetzt. Besonders bevorzugt werden ein oder mehrere $C_1$-$C_4$-Alkylmethacrylate, insbesondere Methylmethacrylat und/oder Butylmethacrylat, polymerisiert. Bei der isocyanatreaktiven Gruppe XH handelt es sich vorzugsweise um eine Hydroxylgruppe, die mit Hilfe von Initiatoren, die beim Zerfall ein Hydroxyradikal liefern, und/oder mit Hilfe von Kettenreglern, die eine Hydroxylgruppe enthalten, terminal in das Polyacrylat eingeführt werden kann.

Ganz besonders bevorzugt als polymere Verbindung V sind Mono- (in der Regel $C_1$-$C_{18}$-, bevorzugt $C_1$-$C_4$-) alkylether von Poly- (insbesondere $C_2$-$C_4$-) alkylenglykolen, die z.B. durch Umsetzung eines Alkanols mit Alkenoxiden, wie Ethylenoxid, Propylenoxid und Butylenoxid, oder Epichlorhydrin erhalten werden können. Besonders geeignet sind mit 5 bis 10000, vorzugsweise 5 bis 80 mol Ethylenoxid und/oder Propylenoxid alkoxylierte $C_1$-$C_{18}$- (insbesondere $C_1$-$C_4$-)Alkanole, wobei Polyethylenglykolmonomethylether ganz besonders geeignet sind.

Das gewichtsmittlere Molekulargewicht des Stabilisatorblocks beträgt vorzugsweise etwa 250 bis 100000, insbesondere etwa 500 bis 7000.

Eine zum Aufbau des Dispergiermittels (B3) geeignete Ausführungsform des Ankergruppenblocks basiert auf Homo- oder Copolymerisaten eines oder mehrerer Monomerer aus der Gruppe der N-Vinylamide, N-Vinyllactame und vinyl- oder allylsubstituierten stickstoffhaltigen Heterocyclen. Beispiele für besonders geeignete Monomere sind N-Vinylpyrrolidon, N-Vinylpyridin, N-Vinylcaprolactam, N-Vinylimidazol und N-Vinylformamid, wobei N-Vinylpyrrolidon bevorzugt ist. Vorzugsweise weist das Homo- oder Copolymer einen K-Wert von 10 bis 100, insbesondere 10 bis 30,- auf. Die Terminierung durch eine Hydroxylgruppe als isocyanatreaktive Gruppe kann durch Durchführung der Polymerisation in Wasser oder einem niederen Alkohol wie Isopropanol oder durch Polymerisation in Gegenwart eines entsprechenden Kettenreglers und/oder Initiators erreicht werden.

Eine weitere zum Aufbau des Dispergiermittels (B3) geeignete Ausführungsform des Ankergruppenblocks bilden Phosphonsäureester der Formel VI

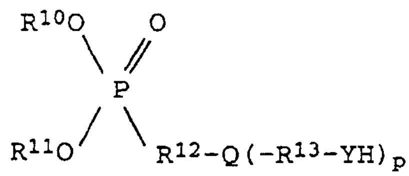

(VI)

in der

$R^{10}$ und $R^{11}$ unabhängig voneinander für $C_1$-$C_4$-Alkyl, insbesondere $R^{10}$ = $R^{11}$ für Methyl oder Ethyl stehen;

Q für $NR_{(2-p)}$ oder $CR_{(3-p)}$ steht (R = H oder $C_1$-$C_8$-Alkyl);

$R^{12}$ und $R^{13}$ unabhängig voneinander für eine chemische Bindung oder für gegebenenfalls mit $C_1$-$C_8$-Alkyl oder Aryl substituiertes $C_1$-$C_{10}$-Alkylen stehen, das gegebenenfalls durch O, NR, CO, COO, OCO, CONR oder NRCO unterbrochen sein kann;

p für 1 oder 2 steht; und

Y für COO, O, S oder $NR^{14}$ steht, wobei $R^{14}$ für H oder eine $C_1$-$C_6$-Alkylgruppe steht.

Bevorzugte Beispiele für diese Phosphonsäureester sind N,N-Bis (hydroxyethyl) aminomethylphosphonsäurediethylester, Dimethylund Diethylester von 3-Hydroxymethylamino-3-oxopropylphosphonsäure, 3-Aminopropylphosphonsäure, 1-Aminopropylphosphonsäure, 2-Aminooctylphosphonsäure, 1-Aminooctylphosphonsäure, 1-Aminobutylphosphonsäure, Hydroxymethylphosphonsäure und 1-Hydroxyethylphosphonsäure.

Die Umsetzung des Di- oder Polyisocyanats mit dem Stabilisatorblock und dem Ankergruppenblock kann zweistufig oder in einer Eintopfreaktion erfolgen. Vorzugsweise erfolgt die Umsetzung jedoch zweistufig, wobei in einer ersten Stufe das Di- oder Polyisocyanat mit dem Stabilisatorblock umgesetzt wird. Die Umsetzung kann in Substanz oder in einem Lösungsmittel erfolgen, wobei die Umsetzung in einem Lösungsmittel, wie Aceton, THF, Toluol, Dioxan, bevorzugt ist. Wenn der Stabilisatorblock durch Polymerisation einer ethylenisch ungesättigten Verbindung hergestellt worden ist, kann die Umsetzung des Stabilisatorblocks mit dem Dioder Polyisocyanat vorteilhaft im gleichen Lösungsmittel wie die radikalische Polymerisation durchgeführt werden. Die Reaktion kann ohne Katalysator oder bevorzugt in Anwesenheit eines Katalysators, wie eines tertiären Amins, insbesondere Triethylamin, oder eines Metallsalzes, insbesondere Zinnoctoat oder Bleioctoat, oder einer metallorganischen Verbindung, wie Dibutylzinndilaurat oder Titantetramethylat, durchgeführt werden. Die Umsetzung wird im allgemeinen bei einer Temperatur von Raumtemperatur bis 125°C, insbesondere 40 bis 90°C, durchgeführt.

Weitere Einzelheiten zu den Dispergiermitteln (B3) sind in der DE-A-198 42 952 beschrieben.

Bei den Dispergiermitteln (B4) handelt es sich um alkoxylierte Hydroxynaphthaline, wobei ethoxylierte β-Hydroxynaphthaline bevorzugt sind. Die Dispergiermittel (B4) weisen in der Regel ein mittleres Molekulargewicht Mw von 2000 bis 40000 g/mol, insbesondere 20000 bis 35000 g/mol, vor allem 25000 bis 30000 g/mol auf.

Die Dispergiermittel (B4) sind allgemein bekannt und auf übliche Weise durch Alkoxylierung von Hydroxynaphthalin zugänglich.

Als Dispergiermittel (B5) eignen sich Alkoxylierungsprodukte von mindestens bifunktionellen aliphatischen oder aromatischen Aminen mit bis zu 8 Kohlenstoffatomen, insbesondere zunächst propoxylierte und dann ethoxylierte Amine. Als Aminokomponente kommen dabei mehrwertige aliphatische Amine wie Ethylendiamin, Diethylentriamin, Triethylentetramin, Tetraethylenpentamin und Hexamethylendiamin und aromatische Amine wie Phenylendiamin sowie Alkoholamine wie Monoethanolamin, Diethanolamin, Triethanolamin, Isopropanolamin, Tri(2-propanol)amin, 2-Amino-1-butanol, N-Butyl-di(2-propanol)amin und Aminophenole in Betracht, wobei die mehrwertigen Alkylenamine, insbesondere Ethylendiamin, bevorzugt sind.

Vorzugsweise haben die Kondensationsprodukte (B5) ein mittleres Molekulargewicht von 3000 bis 20000 g/mol, vor allem 4000 bis 15000 g/mol.

Der Ethylenoyxidanteil an diesen Blockcopolymeren liegt üblicherweise bei 20 bis 45 Gew.-%.

Die Dispergiermittel (B5) sind bekannt und z.B. in der US-A-2 979 528 und der DE-A 31 51 753 beschrieben.

Die erfindungsgemäßen Tinten weisen im Fall eines ungelösten Farbmittels (A1) einen Gehalt von in der Regel 0,1 bis 25 Gew.-%, bevorzugt von 0,5 bis 10 Gew.-%, an Dispergiermittel (B) auf.

Als Komponente (C) enthalten die erfindungsgemäßen Tinten organisches Lösungsmittel. Niedermolekulares Polytetrahydrofuran (C1) ist wesentlicher Bestandteil der Komponente (C), es kann allein oder vorzugsweise im Gemisch mit einem oder mehreren schwerverdampfbaren, in Wasser löslichen oder mit Wasser mischbaren organischen Lösungsmitteln (C2) eingesetzt werden. Das erfindungsgemäß verwendete Polytetrahydrofuran (C1) hat üblicherweise ein mittleres Molekulargewicht $M_w$ von 150 bis 500 g/mol, bevorzugt von 200 bis 300 g/mol und besonders bevorzugt von etwa 250 g/mol (entsprechend einer Molekulargewichtsverteilung von 225 bis 275 g/mol; Poly-THF 250, BASF).

Das Polytetrahydrofuran (C1) kann auf bekannte Weise über kationische Polymerisation von Tetrahydrofuran hergestellt werden. Dabei entstehen lineare Polytetramethylenglykole.

Wenn das Polytetrahydrofuran (C1) im Gemisch mit weiteren organischen Lösungsmitteln (C2) vorliegt, werden hierfür erfindungsgemäß schwerverdampfbare (d.h. in der Regel einen Siedepunkt > 100°C aufweisende) und damit eine wasserrückhaltende Wirkung besitzende organische Lösungsmittel eingesetzt, die in Wasser löslich oder mit Wasser mischbar sind.

Als Lösungsmittel (C2) eignen sich mehrwertige Alkohole, bevorzugt unverzweigte und verzweigte mehrwertige Alkohole mit 2 bis 8, insbesondere 3 bis 6, Kohlenstoffatomen, wie Ethylenglykol, 1,2- und 1,3-Propylenglykol, Glycerin, Erythrit, Pentaerythrit, Pentite wie Arabit, Adonit und Xylit und Hexite wie Sorbit, Mannit und Dulcit.

Weitere geeignete Lösungsmittel (C2) sind Polyethylen- und Polypropylenglykole, worunter auch die niederen Polymere (Di-, Triund Tetramere) verstanden werden sollen, und deren Mono- (vor allem $C_1$-$C_6$-, insbesondere $C_1$-$C_4$-) alkylether. Bevorzugt sind Polyethylen- und Polypropylenglykole mit mittleren Molekulargewichten von 100 bis 1500 g/mol, insbesondere von 200 bis 800 g/mol, vor allem von 300 bis 500 g/mol. Als Beispiele seien Di-, Tri- und Tetraethylenglykol, Diethylenglykolmonomethyl-, -ethyl-, -propylund -butylether, Triethylenglykolmonomethyl-, -ethyl-, -propylund -butylether, Di-, Tri- und Tetra-1,2- und -1,3-propylenglykol und Di-, Tri- und Tetra-1,2- und -1,3-propylenglykolmonomethyl-, -ethyl-, -propyl- und -butylether genannt.

Weiterhin als Lösungsmittel (C2) geeignet sind Pyrrolidon und N-Alkylpyrrolidone, deren Alkylkette vorzugsweise 1 bis 4, vor allem 1 bis 2, Kohlenstoffatome enthält. Beispiele für geeignete Alkylpyrrolidone sind N-Methylpyrrolidon, N-Ethylpyrrolidon und N-(2-Hydroxyethyl)pyrrolidon

Beispiele für besonders bevorzugte Lösungsmittel (C2) sind 1,2-und 1,3-Propylenglykol, Glycerin, Sorbit, Diethylenglykol, Polyethylenglykol ($M_w$ 300 bis 500 g/mol), Diethylenglykolmonobutylether, Triethylenglykolmonobutylether, Pyrrolidon, N-Methylpyrrolidon und N-(2-Hydroxyethyl)pyrrolidon.

Das Polytetrahydrofuran (C1) kann mit einem oder mehreren (z.B. zwei, drei oder vier) Lösungsmitteln (C2) gemischt werden.

Die erfindungsgemäßen Tinten enthalten in der Regel 0,1 bis 40 Gew.-%, bevorzugt 5 bis 30 Gew.-%, besonders bevorzugt 10 bis 25 Gew.-%, und ganz besonders bevorzugt 10 bis 20 Gew.-%, Lösungsmittelkomponente (C).

Vorzugsweise liegt das Gewichtsverhältnis von (C2) zu (C1 im Bereich von 20 : 1 bis 1 : 1. Die erfindungsgemäßen Tinten enthalten dementsprechend bevorzugt 0,5 bis 20 Gew.-%, insbesondere 1 bis 10 Gew.-%, Polytetrahydrofuran (C1) und 1 bis 30 Gew.-%, insbesondere 1 bis 20 Gew.-%, Lösungsmittel (C2).

Ein Beispiel für eine besonders bevorzugte Lösungsmittelkomponente (C) ist die Kombination von 1 bis 10 Gew.-% Polytetrahydrofuran ($M_w$ 150 bis 500 g/mol), 1 bis 10 Gew.-% Glycerin, Sorbit und/oder Propylenglykol, 1 bis 10 Gew.-% Polyethylenglykol ($M_w$ 300 bis 500 g/mol) und 1 bis 10 Gew.-% Di- und/oder Triethylenglykolmonobutylether (Mengen jeweils bezogen auf das Gewicht der Farbmittelzubereitung).

Die Lösungsmittelkomponente (C), insbesondere auch die genannte besonders bevorzugte Lösungsmittelkombination, kann vorteilhaft durch Harnstoff (in der Regel 0,5 bis 3 Gew.-%, bezogen auf das Gewicht der Tinte ergänzt werden, der die wasserrückhaltende Wirkung des Lösungsmittelgemisches (C) noch verstärkt.

Wasser stellt den Hauptbestandteil (D) der erfindungsgemäßen Tinten dar. Sein Gehalt beträgt üblicherweise 50 bis 95 Gew.-%. Für bindemittelfreie Zubereitungen ist dabei ein Wassergehalt von 60 bis 80 Gew.-% bevorzugt, in bindemittelhaltigen Zubereitungen beträgt der Wassergehalt vorzugsweise 50 bis 75 Gew.-%.

Selbstverständlich können die erfindungsgemäßen Tinten weitere Hilfsmittel, wie sie insbesondere für (wäßrige) Ink-Jet-Tinten und in der Druck- und Lackindustrie üblich sind, enthalten. Genannt seien z.B. Konservierungsmittel (wie 1,2-Benzisothiazolin-3-on und dessen Alkalimetallsalze, Glutardialdehyd und/oder Tetramethylolacetylendiharnstoff), Antioxidantien, Entgaser/Entschäumer (wie Acetylendiole und ethoxylierte Acetylendiole, die üblicherweise 20 bis 40 mol Ethylenoxid pro mol Acetylendiol enthalten und gleichzeitig auch dispergierend wirken), Mittel zur Regulierung der Viskosität, Verlaufshilfsmittel, Benetzer (z.B. benetzend wirkende Tenside auf der Basis von ethoxylierten oder propoxylierten Fett- oder Oxoalkoholen, Propylenoxid/Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, A1-kylphosphaten, Alkylphenylphosphaten oder bevorzugt Polyethersiloxan-Copolymeren, insbesondere alkoxylierten 2-(3-Hydroxypropyl)heptamethyltrisiloxanen, die in der Regel einen Block aus 7 bis 20, vorzugsweise 7 bis 12, Ethylenoxideinheiten und einen Block aus 2 bis 20, vorzugsweise 2 bis 10 Propylenoxideinheiten aufweisen und in Mengen von 0,05 bis 1 Gew.-% in den Farbmittelzubereitungen enthalten sein können), Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer, Antistatikmittel und Basen wie Triethanolamin zur Regulierung des pH-Wertes. Wenn diese Mittel Bestandteil der erfindungsgemäßen Tinten sind, beträgt ihre Gesamtmenge

in der Regel ≤ 2 Gew.-%, insbesondere ≤ 1 Gew.-%, bezogen auf das Gewicht der Tinte.

Erfindungsgemäße bindemittelfreie Tinten weisen üblicherweise eine dynamische Viskosität von 1 bis 7 $mm^2$/sec, vorzugsweisel bis 5 $mm^2$/sec, insbesondere von 1 bis 3 $mm^2$/sec auf. Erfindungsgemäße bindemittelhaltige Tinten haben eine dynamische Viskosität von in der Regel 1 bis 25 $mm^2$/sec, bevorzugt 1 bis 15 $mm^2$/sec, vor allem von 1 bis 10 $mm^2$/sec.

Die Oberflächenspannung der erfindungsgemäßen (bindemittelfreien oder bindemittelhaltigen) Tinten beträgt in der Regel 24 bis 70 mN/m, insbesondere 30 bis 60 mN/m.

Der pH-Wert der erfindungsgemäßen Tinten liegt im allgemeinen bei 5 bis 10, vorzugsweise bei 7 bis 9.

Bei der Herstellung der erfindungsgemäßen Tinten auf Basis von ungelöstem Farbmittel (A1) geht man zweckmäßigerweise wie folgt vor:

Man mischt das Farbmittel (A1), beispielsweise in Form eines wasserhaltigen Preßkuchens, zusammen mit dem Dispergiermittel (B) in Gegenwart von Wasser und dispergiert in einer geeigneten Apparatur vor. Die resultierende Mischung mahlt man anschließend in einer Mühle, um die gewünschte Teilchengrößenverteilung (in der Regel ≤ 1 µm, bevorzugt ≤ 0,5 µm) zu erreichen. Nach Einstellung der gewünschten Farbmittelkonzentration durch Zugabe von Lösungsmittel (C), Wasser und gegebenenfalls weiteren Hilfsmitteln filtriert man mit einer Filtriervorrichtung mit Feinabtrennung im Bereich von 1 bis 0,5 µm.

Als Ausgangsmaterial für Zubereitungen mit gelöstem Farbstoff (A2) sind höher konzentrierte Farbstofflösungen, z.B. 10 bis 30 gew.-%ige Flüssigeinstellungen von Papierfarbstoffen, besonders geeignet. Diese werden gegebenenfalls entsalzt und filtriert (z.B. Nanofiltration), bevor die gewünschte Farbstoffkonzentration eingestellt wird.

Die erfindungsgemäßen Tinten können vorteilhaft in dem ebenfalls erfindungsgemäßen Verfahren zum Bedrucken von flächigen oder dreidimensional gestalteten Substraten in Ink-Jet-Verfahren eingesetzt werden, welches dadurch gekennzeichnet ist, daß man die Farbmittelzubereitungen auf das Substrat aufdruckt und den erhaltenen Druck gewünschtenfalls anschließend fixiert.

Beim Ink-Jet-Verfahren werden die üblicherweise wäßrigen Tinten in kleinen Tröpfchen direkt auf das Substrat gesprüht. Man unterscheidet dabei ein kontinuierliches Verfahren, bei dem die Tinte gleichmäßig durch eine Düse gepreßt und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Tinten als Tinten für das Bubble-Jet-Verfahren und für das Verfahren mittels eines piezoelektrischen Kristalls.

Ist eine Fixierung des Drucks erwünscht, so kann man auf bekannte weise und wie in der WO-A-99/01516 beschrieben vorgehen und z.B. ein Bindemittel, gewünschtenfalls in Form einer Dispersion oder Emulsion, auf das bedruckte Substrat auftragen und härten oder eine Folie auflamieren.

Die erfindungsgemäßen Tinten können jedoch auch bereits das thermisch oder strahlungschemisch härtbare Bindemittel, in der Regel in einer Menge von 2 bis 20 Gew.-% (ber. 100% Festkörper), enthalten.

Als thermisch härtbare Bindemittel eignen sich z.B. besonders durch Polykondensation vernetzende Bindemittel auf Basis von methylolgruppenhaltigen Acrylaten.

Als bevorzugte Systeme seien dabei Mischungen von

1 bis 10 Gew.-% N-Methylol(meth)acrylamid oder deren $C_1$-$C_4$-Alkylethern und gewünschtenfalls Halogenhydringruppen enthaltenden Monomeren wie 2-Hydroxy-3-chlorpropylenacrylat und

90 bis 99 Gew.-% Comonomeren, z.B. aus der Gruppe Butadien, Styrol, (Meth)Acrylsäure, (Meth)Acrylnitril, (Meth) Acrylsäureund Vinylester mit bis zu 12 C-Atomen, Vinylchlorid und N-Vinylpyrrolidon

genannt, wie sie beispielsweise in der DE-A-16 19 656 beschrieben sind.

Unter Einwirkung von Säuren bzw. unter Wärmeeinfluß Protonen abspaltenden Verbindungen wie Ammoniumphosphaten bewirken die methylolgruppenhaltigen Acrylsäurederivate zusätzliche Vernetzung.

Als weitere Beispiele für geeignete thermisch härtbare Bindemittel seien auf Polyurethanprepolymeren basierende Bindemittel genannt, die ebenfalls durch Poylkondensation vernetzen.

Bei den strahlungshärtbaren Bindemitteln handelt es sich erfindungsgemäß um Bindemittel, die durch Strahlung hoher Energie, d.h. elektromagnetische Stahlung insbesondere von 220 bis 450 nm (UV-Strahlung) oder Elektronenstrahlen, zu härten sind. Geeignet sind sowohl radikalisch als auch kationisch polymerisierbare Bindemittelkomponenten sowie auch deren Mischungen.

Als Beispiele seien acrylatgruppenhaltige, vinylgruppenhaltige und/oder epoxygruppenhaltige Monomere, Prepolymere und Polymere und deren Mischungen genannt.

Weitere Einzelheiten zu diesen Bindemitteln sind der WO-A-99/01516 zu entnehmen.

Die erfindungsgemäßen Tinten können auf alle Arten von Substratmaterialien gedruckt werden. Als Substratmaterialien seien z.B.

- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien wie Glas, Porzellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- textile Materialien wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder,
- Lebensmittel und Kosmetika

genannt.

Das Substratmaterial kann dabei flächig oder dreidimensional gestaltet sein und sowohl vollflächig als auch bildmäßig mit den erfindungsgemäßen Tinten bedruckt werden.

Die erfindungsgemäßen Tinten zeichnen sich als Ink-Jet-Tinten mit insgesamt vorteilhaften Anwendungseigenschaften, vor allem gutem Anschreibverhalten und gutem Dauerschreibverhalten (Kogation) sowie, insbesondere bei Verwendung der besonders bevorzugten Lösungsmittelkombination (C), gutes Trocknungsverhalten, aus und ergeben Druckbilder hoher Qualität, d.h. hoher Brillanz und Farbtiefe sowie hoher Reib-, Licht-, Wasserund Naßreibechtheit. Besonders geeignet sind sie zum Drucken auf gestrichenes und ungestrichenes Papier.

Beispiele

I) Herstellung erfindungsgemäßer Tinten

Beispiel 1

15 g C.I. Pigment Yellow 138, 5 g 1,2-Propylenglykol und 10 g eines Dispergiermittels (B2) auf Basis eines oxalkylierten Phenols, das in der US-A-4 218 218 als Dispergiermittel 13 beschrieben ist, 0,37 g 50 gew.-%ige wäßrige Lösung von Glutardialdehyd und 0,75 g 47 gew.-%ige wäßrige Lösung von Tetramethylolacetylendiharnstoff wurden mit vollentsalztem Wasser zum Gesamtgewicht von 100 g aufgefüllt und in einem Dissolver vordispergiert. Dann wurde der pH-Wert mit Triethanolamin auf 8,5 gestellt.

Anschließend wurde die Mischung so lange in einer vertikalen Rührwerkskugelmühle mit Doppelmahlscheibe bei 10 m/s Umfangsgeschwindigkeit unter Verwendung von 660 g yttriumstabilisierten Zirkonoxid-Perlen (Durchmesser 0,3 - 0,4 mm) gemahlen, bis 99% der Pigmentteilchen eine Größe von kleiner 1μm aufwiesen.

Zur Endeinstellung (4 gew.-%ige Zubereitung) wurden 37,5 g Mahlgut mit 0,25 g 50 gew.-%iger wäßriger Lösung von Glutardialdehyd, 0,22 g 47 gew.-%iger wäßriger Lösung von Tetramethylolacetylendiharnstoff, 10 g Triethylenglykolmonobutylether und 10 g Polytetrahydrofuran 250 (BASF) versetzt, mit Wasser bis zu einem Gesamtgewicht von 100 g aufgefüllt, gemischt und über ein Sieb mit einer Porengröße von 1 μm filtriert.

Beispiel 2 bis 106

Die Tinten der Beispiele 2 bis 71 sowie die Dispersions- und Solventfarbstoffzubereitungen der Beispiele 72 bis 106 wurden analog Beispiel 1 hergestellt.

In Beispiel 20 und 21 sowie 22 und 23 wurde jedoch ein Dispergiermittel (B3) bzw. (B3') auf Basis eines

Umsetzungsprodukts eines Triisocyanats mit zwei jeweils eine isocyanatreaktive Gruppe enthaltenden Verbindungen eingesetzt (Beispiel 1 bzw. Beispiel 4 der DE-A-198 42 952).

Dispergiermittel (B3)

Zu einer auf 50°C erwärmten, 35 gew.-%igen Lösung von Polyethylenglykolmonomethylether (MG 2000, 1 mol) in Aceton wurden ein handelsübliches trifunktionelles Isocyanat (Basonat® HB 100, BASF; 1 mol) sowie Dibutylzinndilaurat als Katalysator gegeben. Entsprechend dem verbleibenden Isocyanatgehalt wurde anschließend OH-monofunktionalisiertes Polyvinylpyrrolidon (PVP, K-Wert etwa 17) zugegeben. Die Reaktion wurde fortgesetzt, bis keine Isocyanatgruppen mehr nachzuweisen waren.

Dispergiermittel (B3')

Zu einer auf 50°C erwärmten, 45 gew.-%igen Lösung von Polyethylenglykolmonomethylether (MG 2000, 1 mol) in Tetrahydrofuran wurden ein handelsübliches trifunktionelles Isocyanat (Basonat HB 100, BASF; 1 mol) sowie Dibutylzinndilaurat als Katalysator gegeben. Entsprechend dem verbleibenden Isocyanatgehalt wurde anschließend N,N-Bis(hydroxyethyl)aminomethyldiethyl(phosphonat (Fyrol® 6, Akzo; etwa 2 mol; 50 gew.-%ig in Tetrahydrofuran) gegeben. Die Reaktion wurde fortgesetzt, bis keine Isocyanatgruppen mehr nachzuweisen waren.

In Beispiel 41 bis 57 und 64 bis 69 wurde ein Dispergiermittel (B4) auf Basis eines ethoxylierten β-Hydroxynaphthalins ($M_w$ 27000 g/mol) eingesetzt.

In Beispiel 70 bzw. 71 kam ein Dispergiermittel B5 bzw. B5' auf Basis eines zunächst propoxylierten und dann ethoxylierten Ethylendiamins, das in der DE-A-31 51 753 in Beispiel 4 bzw. 2 beschrieben ist, zum Einsatz.

Die Beispiele 72 bis 106 enthielten ein Dispergiermittel B1 auf Basis eines Arylsulfonsäure-Formaldehyd-Kondensationsproduktes, das zusätzlich noch Benzoesäure enthält und in der US-A-5 186 846 als Dispergiermittel 3 beschrieben ist.

Zusätzlich wurde in Beispiel 58 bis 69 ein handelsüblicher thermisch härtbarer Textilbinder auf Basis eines Acrylat/Styrol-Copolymerisats eingesetzt.

Weitere Angaben zu den erhaltenen Tinten sind in Tabelle 1a, 1b und 1c zusammengestellt. Bei den Prozentangaben handelt es sich jeweils um Gew.-%.

Dabei bedeuten:

Biozid A: 50%ige wäßrige Lösung von Glutardialdehyd

Biozid B: 4%ige wäßrige Lösung von Tetramethylolacetylendiharnstoff

Biozid C: 20%ige Lösung von 1,2-Benzisothiazolin-3-on in wäßrigem Ethylenglykol

Biozid D: 10%ige Lösung von 1,2-Benzisothiazolin-3-on in wäßrigem Propylenglykol

Netzmittel: 2-(3-Hydroxypropyl)heptamethyltrisiloxan, zunächst ethoxyliert und dann propoxyliert (11 mol EO/5 mol PO)

Tabelle 1a

| | Zubereitung Nr. | | | | | | | |
|---|---|---|---|---|---|---|---|---|
| | 1 | 2 | 3 | 4 | 5 | 6 | 7 | 8 |
| C.I.Pigment Yellow 138 | 4% | | | | | | 5% | |
| C.I.Pigment Red 122 | | | | | | 2,5% | | |
| C.I.Pigment Blue 15:3 | | | | | 1% | | | |
| C.I.Pigment Blue 15:4 | | 2% | | | | | | |
| C.I.Pigment Black 7 | | | | 5% | | | | 4% |
| C.I.Pigment Green 7 | | | | | | | | |
| C.I.Pigment Violet 19 | | | 2 % | | | | | |
| Dispergiermittel | 2,67% B2 | 2% B2 | 2% B2 | 2,5% B2 | 0,5% B2 | 1,25% B2 | 2,5% B2 | 2% B2 |
| Polytetrahydrofuran 250 | 10% | | | 2% | 2% | 2% | 2% | 5% |
| N-(2-Hydroxyethyl)pyrrolidon | | | | | | | | |
| 1,2-Propylenglykol | 1,33% | 0,67% | 0,67% | 5% | 5% | 5% | 6,7% | |
| Diethylenglykol | | | | 8% | 8% | 8% | 3% | 15% |
| Triethylenglykolmonobutylether | 10% | 10% | 10% | 2% | 2% | 2% | 6% | |
| Diethylenglykolmonobutylether | | | | 3% | | | | |
| Polyethylenglykol ($\overline{MG}$ 400) | | | | | | | | |
| Biozid A | 0,4% | 0,4% | 0,4% | | | | | |
| Biozid B | 0,5% | 0,5% | 0,5% | | | | | |
| vollentsalztes Wasser | 71,1% | 86,43% | 84,43% | 72,5% | 81,5% | 79,25% | 74,8% | 74% |
| Gesamt | 100% | 100% | 100% | 100% | 100% | 100% | 100% | 100% |

Tabelle 1a

| | Zubereitung Nr. | | | | | | | |
|---|---|---|---|---|---|---|---|---|
| | 9 | 10 | 11 | 12 | 13 | 14 | 15 | 16 |
| C.I.Pigment Yellow 138 | | 4% | 4% | | | | | |
| C.I.Pigment Red 122 | | | | | | | | |
| C.I.Pigment Blue 15:3 | 4% | | | | 4% | 4% | | |
| C.I.Pigment Blue 15:4 | | | | | | | | |
| C.I.Pigment Black 7 | | | | 4% | | | 5% | 5% |
| C.I.Pigment Green 7 | | | | | | | | |
| C.I.Pigment Violet 19 | | | | | | | | |
| Dispergiermittel | 2% B2 | 2% B2 | 2% B2 | 2% B2 | 2% B2 | 2% B2 | 2,5% B2 | 2,5% B2 |
| Polytetrahydrofuran 250 | 5% | 5% | 5% | 5% | 5% | 20% | 10% | 5% |
| N-(2-Hydroxyethyl)pyrrolidon | | | | | | | | |
| 1,2-Propylenglykol | | | 15% | 15% | 15% | | | 5% |
| Diethylenglykol | 15% | 15% | | | | | | |
| Triethylenglykolmonobutylether | | | | | | | | |
| Diethylenglykolmonobutylether | | | | | | | | |
| Polyethylenglykol ($\overline{MG}$ 400) | | | | | | | | |
| Biozid A | | | | | | | | |
| Biozid B | | | | | | | | |
| vollentsalztes Wasser | 74% | 74% | 74% | 74% | 74% | 74% | 82,5% | 82,5% |
| Gesamt | 100% | 100% | 100% | 100% | 100% | 100% | 100% | 100% |

Tabelle 1a

| | Zubereitung Nr. | | | | | | |
|---|---|---|---|---|---|---|---|
| | 17 | 18 | 19 | 20 | 21 | 22 | 23 |
| C.I.Pigment Yellow 138 | | | | | | | |
| C.I.Pigment Red 122 | | | 2,5% | | | | |
| C.I.Pigment Blue 15:3 | | | | 4% | 4% | 1,5% | 1,5% |
| C.I.Pigment Blue 15:4 | | | | | | | |
| C.I.Pigment Black 7 | 5% | 5% | | | | | |
| C.I.Pigment Green 7 | | | | | | | |
| C.I.Pigment Violet 19 | | | | | | | |
| Dispergiermittel | 2,5% B2 | 2,5% B2 | 1,25% B2 | 4% B3 | 4% B3' | 1,5% B3 | 1,5% B3' |
| Polytetrahydrofuran 250 | 5% | 10% | 10% | 10% | 10% | 10% | 10% |
| N-(2-Hydroxyethyl)pyrrolidon | 5% | 10% | | | | | |
| 1,2-Propylenglykol | | | | | | | |
| Diethylenglykol | | | | | | | |
| Triethylenglykolmonobutyl-ether | | | | 10% | 10% | 10% | 10% |
| Diethylenglykolmonobutylether | | | | | | | |
| Polyethylenglykol ($\overline{MG}$ 400) | | | | 0,6% | 0,6% | 0,23% | 0,23% |
| Biozid A | | | | 0,4% | 0,4% | 0,4% | 0,4% |
| Biozid B | | | | 0,5% | 0,5% | 0,5% | 0,5% |
| vollentsalztes Wasser | 82,5% | 72,5% | 86,25% | 70,5% | 70,5% | 75,87% | 75,87% |
| Gesamt | 100% | 100% | 100% | 100% | 100% | 100% | 100% |

Tabelle 1b

| | Zubereitung Nr. | | | | | | | |
|---|---|---|---|---|---|---|---|---|
| | 24 | 25 | 26 | 27 | 28 | 29 | 30 | 31 |
| C.I.Pigment Yellow 138 | 4% | | | | | | 4,5% | |
| C.I.Pigment Red 122 | | 2,5% | | | | | | 2,5% |
| C.I.Pigment Blue 15:4 | | | 2% | | | | | |
| C.I.Pigment Blue 15:3 | | | | | | | | |
| C.I.Pigment Orange 43 | | | | 2,5% | | | | |
| C.I.Pigment Green 7 | | | | | 2,5% | | | |
| C.I.Pigment Red 146 | | | | | | 3% | | |
| C.I.Pigment Black 7 | | | | | | | | |
| Dispergiermittel | 2% B1 | 2,5% B1 | 2% B1 | 2,5% B1 | 2,5% B1 | 3% B1 | 2,25% B1 | 2,5 B1 |
| Polytetrahydrofuran 250 | 6% | 6% | 6% | 6% | 6% | 6% | 6% | 6% |
| Glycerin | 6% | 6% | 6% | 6% | 6% | 6% | 4% | 4% |
| 1,2-Propylenglykol | 1,33% | 0,83% | 0,67% | 0,83% | 0,83% | 1% | 1,5% | 0,83% |
| Triethylenglykolmonobutyl-ether | 3% | 3% | 3% | 3% | 3% | 3% | 5% | 5% |
| Polyethylenglykol ($\overline{MG}$ 400) | 5% | 5% | 5% | 5% | 5% | 5% | 5% | 5% |
| Harnstoff | 1% | 1% | 1% | 1% | 1% | 1% | 1% | 1% |
| Netzmittel | 0,5% | 0,5% | 0,5% | 0,5% | 0,5% | 0,5% | 0,5% | |
| Triethanolamin | 0,4% | | | | | | 0,045% | |
| Biozid A | | | | | | | | 0,1% |
| Biozid B | | | | | | | | 0,12% |
| Biozid C | 0,2% | 0,12% | 0,1% | 0,12% | 0,12% | 0,15% | 0,225% | |
| Biozid D | | | | | | | | |
| Bindemittel | | | | | | | | |
| vollentsalztes Wasser | 70,93% | 72,55% | 73,73% | 72,55% | 72,55% | 71,35% | 70,48% | 72,95% |
| Gesamt | 100% | 100% | 100% | 100% | 100% | 100% | 100% | 100% |

Tabelle 1b

| | Zubereitung Nr. | | | | | | | |
|---|---|---|---|---|---|---|---|---|
| | 32 | 33 | 34 | 35 | 36 | 37 | 38 | 39 |
| C.I.Pigment Yellow 138 | | | 1,6% | 2,5% | | | | |
| C.I.Pigment Red 122 | | | | | 2% | | | |
| C.I.Pigment Blue 15:4 | 2% | | | | | 1,5% | | |
| C.I.Pigment Blue 15:3 | | 2% | | | | | | |
| C.I.Pigment Orange 43 | | | | | | | 2% | |
| C.I.Pigment Green 7 | | | | | | | | 2% |
| C.I.Pigment Red 146 | | | | | | | | |
| C.I.Pigment Black 7 | | | | | | | | |
| Dispergiermittel | 2% B1 | 2% B1 | 0,8% B1 | 1,25% B1 | 2% B1 | 1,5% B1 | 2% B1 | 2% B1 |
| Polytetrahydrofuran 250 | 6% | 6% | 6% | 6% | 6% | 6% | 6% | 6% |
| Glycerin | 4% | 4% | 4% | 4% | 4% | 4% | 4% | 4% |
| 1,2-Propylenglykol | 0,67% | 0,67% | 0,53% | 0,83% | 0,67% | 0,5% | 0,67% | 0,67% |
| Triethylenglykolmonobutylether | 5% | 5% | 5% | 5% | 5% | 5% | 5% | 5% |
| Polyethylenglykol ($\overline{MG}$ 400) | 5% | 5% | 5% | 5% | 5% | 5% | 5% | 5% |
| Harnstoff | 1% | 1% | 1% | 1% | 1% | 1% | 1% | 1% |
| Netzmittel | | | 0,5% | 0,5% | 0,5% | 0,5% | 0,5% | 0,5% |
| Triethanolamin | | | 0,016% | 0,025% | | | | |
| Biozid A | 0,08% | 0,08% | | | | | | |
| Biozid B | 0,1% | 0,1% | | | | | | |
| Biozid C | | | 0,08% | 0,125% | 0,1% | 0,07% | | 0,1% |
| Biozid D | | | | | | | 0,1% | |
| Bindemittel | | | | | | | | |
| vollentsalztes Wasser | 74,15% | 74,15 | 75,474% | 73,77% | 73,73% | 74,93% | 73,73% | 73,73% |
| Gesamt | 100% | 100% | 100% | 100% | 100% | 100% | 100% | 100% |

Tabelle 1b

| | Zubereitung Nr. | | | | | | | |
|---|---|---|---|---|---|---|---|---|
| | 40 | 41 | 42 | 43 | 44 | 45 | 46 | 47 |
| C.I.Pigment Yellow 138 | | 4% | | | | | | 4,5% |
| C.I.Pigment Red 122 | | | 2,5% | | | | | |
| C.I.Pigment Blue 15:4 | | | | 2% | | | | |
| C.I.Pigment Blue 15:3 | | | | | | | | |
| C.I.Pigment Orange 43 | 2% | | | | 2,5% | | | |
| C.I.Pigment Green 7 | | | | | | 2,5% | | |
| C.I.Pigment Red 146 | | | | | | | 3% | |
| C.I.Pigment Black 7 | | | | | | | | |
| Dispergiermittel | 2% B1 | 2% B4 | 2,5% B4 | 2% B4 | 2,5% B4 | 2,5% B4 | 3% B4 | 2,25% B4 |
| Polytetrahydrofuran 250 | 6% | 6% | 6% | 6% | 6% | 6% | 6% | 6% |
| Glycerin | 4% | 6% | 6% | 6% | 6% | 6% | 6% | 4% |
| 1,2-Propylenglykol | 0,67% | 1,33% | 0,83% | 0,67% | 0,83% | 0,83% | 1% | 1,5% |
| Triethylenglykolmonobutylether | 5% | 3% | 3% | 3% | 3% | 3% | 3% | 5% |
| Polyethylenglykol ($\overline{MG}$ 400) | 5% | 5% | 5% | 5% | 5% | 5% | 5% | 5% |
| Harnstoff | 1% | 1% | 1% | 1% | 1% | 1% | 1% | 1% |
| Netzmittel | 0,5% | 0,5% | 0,5% | 0,5% | 0,5% | 0,5% | 0,5% | |
| Triethanolamin | | 0,04% | | | | | | 0,045% |
| Biozid A | | | | | | | | |
| Biozid B | | | | | | | | |
| Biozid C | | 0,2% | 0,12% | 0,1% | 0,12% | 0,12% | 0,15% | 0,225% |
| Biozid D | 0,1% | | | | | | | |
| Bindemittel | | | | | | | | |
| vollentsalztes Wasser | 73,73% | 70,93% | 72,55% | 73,73% | 72,55% | 72,55% | 71,35% | 70,48% |
| Gesamt | 100% | 100% | 100% | 100% | 100% | 100% | 100% | 100% |

Tabelle 1b

| | Zubereitung Nr. | | | | | | | |
|---|---|---|---|---|---|---|---|---|
| | 48 | 49 | 50 | 51 | 52 | 53 | 54 | 55 |
| C.I.Pigment Yellow 138 | | | | 1,6% | 2,5% | | | |
| C.I.Pigment Red 122 | 2,5% | | | | | 2% | | |
| C.I.Pigment Blue 15:4 | | 2% | | | | | 1,5% | |
| C.I.Pigment Blue 15:3 | | | 2% | | | | | |
| C.I.Pigment Orange 43 | | | | | | | | 2% |
| C.I.Pigment Green 7 | | | | | | | | |
| C.I.Pigment Red 146 | | | | | | | | |
| C.I.Pigment Black 7 | | | | | | | | |
| Dispergiermittel | 2,5% B4 | 2% B4 | 2% B4 | 0,8% B4 | 1,25% B4 | 2% B4 | 1,5% B4 | 2% B4 |
| Polytetrahydrofuran 250 | 6% | 6% | 6% | 6% | 6% | 6% | 6% | 6% |
| Glycerin | 4% | 4% | 4% | 4% | 4% | 4% | 4% | 4% |
| 1,2-Propylenglykol | 0,83% | 0,67% | 0,67% | 0,83% | 0,83% | 0,67% | 0,5% | 0,67% |
| Triethylenglykolmonobutylether | 5% | 5% | 5% | 5% | 5% | 5% | 5% | 5% |
| Polyethylenglykol ($\overline{MG}$ 400) | 5% | 5% | 5% | 5% | 5% | 5% | 5% | 5% |
| Harnstoff | 1% | 1% | 1% | 1% | 1% | 1% | 1% | 1% |
| Netzmittel | | | | 0,5% | 0,5% | 0,5% | 0,5% | 0,5% |
| Triethanolamin | | | | 0,016% | 0,025% | | | |
| Biozid A | 0,1% | 0,08% | 0,08% | | | | | 0,08% |
| Biozid B | 0,12% | 0,1% | 0,1% | | | | | 0,1% |
| Biozid C | | | | 0,08% | 0,125% | 0,1% | 0,07% | |
| Biozid D | | | | | | | | 0,1% |
| Bindemittel | | | | | | | | |
| vollentsalztes Wasser | 72,95% | 74,15% | 74,15% | 75,474% | 73,77% | 73,73% | 74,93 | 73,73% |
| Gesamt | 100% | 100% | 100% | 100% | 100% | 100% | 100% | 100% |

Tabelle 1b

| | Zubereitung Nr. | | | | | | | |
|---|---|---|---|---|---|---|---|---|
| | 56 | 57 | 58 | 59 | 60 | 61 | 62 | 63 |
| C.I.Pigment Yellow 138 | | | 4% | | | | | |
| C.I.Pigment Red 122 | | | | 2,5% | | | | |
| C.I.Pigment Blue 15:4 | | | | | 2% | | | |
| C.I.Pigment Blue 15:3 | | | | | | | | |
| C.I.Pigment Orange 43 | | | | | | 2,5% | | |
| C.I.Pigment Green 7 | 2% | | | | | | 2,5% | |
| C.I.Pigment Red 146 | | 2% | | | | | | 3% |
| C.I.Pigment Black 7 | | | | | | | | |
| Dispergiermittel | 2% B4 | 2% B4 | 2% B1 | 2,5% B1 | 2% B1 | 2,5% B1 | 2,5% B1 | 3% B1 |
| Polytetrahydrofuran 250 | 6% | 6% | 6% | 6% | 6% | 6% | 6% | 6% |
| Glycerin | 4% | 4% | 6% | 6% | 6% | 6% | 6% | 6% |
| 1,2-Propylenglykol | 0,67% | 0,67% | 1,33% | 0,83% | 0,67% | 0,83% | 0,83% | 1% |
| Triethylenglykolmonobutylether | 5% | 5% | 3% | 3% | 3% | 3% | 3% | 3% |
| Polyethylenglykol ($\overline{MG}$ 400) | 5% | 5% | 5% | 5% | 5% | 5% | 5% | 5% |
| Harnstoff | 1% | 1% | 1% | 1% | 1% | 1% | 1% | 1% |
| Netzmittel | 0,5% | 0,5% | 0,5% | 0,5% | 0,5% | 0,5% | 0,5% | 0,5% |
| Triethanolamin | | | 0,04% | | | | | |
| Biozid A | | 0,08% | | | | | | |
| Biozid B | | 0,1% | | | | | | |
| Biozid C | 0,1% | | 0,2% | 0,12% | 0,1% | 0,12% | 0,12% | 0,15% |
| Biozid D | | 0,1% | | | | | | |
| Bindemittel | | | 15% | 15% | 15% | 15% | 15% | 15% |
| vollentsalztes Wasser | 73,73% | 73,73% | 55,93% | 57,55% | 58,73% | 57,55% | 57,55% | 56,35% |
| Gesamt | 100% | 100% | 100% | 100% | 100% | 100% | 100% | 100% |

Tabelle 1b

| | Zubereitung Nr. | | | | | | | |
|---|---|---|---|---|---|---|---|---|
| | 64 | 65 | 66 | 67 | 68 | 69 | 70 | 71 |
| C.I.Pigment Yellow 138 | 4% | | | | | | | |
| C.I.Pigment Red 122 | | 2,5% | | | | | | |
| C.I.Pigment Blue 15:4 | | | 2% | | | | 4% | |
| C.I.Pigment Blue 15:3 | | | | | | | | |
| C.I.Pigment Orange 43 | | | | 2,5% | | | | |
| C.I.Pigment Green 7 | | | | | 2,5% | | | |
| C.I.Pigment Red 146 | | | | | | 3% | | |
| C.I.Pigment Black 7 | | | | | | | | 4% |
| Dispergiermittel | 2% B4 | 2,5% B4 | 2% B4 | 2,5% B4 | 2,5% B4 | 3% B4 | 4% B5 | 4% B5' |
| Polytetrahydrofuran 250 | 6% | 6% | 6% | 6% | 6% | 6% | 10% | 10% |
| Glycerin | 6% | 6% | 6% | 6% | 6% | 6% | | |
| 1,2-Propylenglykol | 1,33% | 0,83% | 0,67% | 0,83% | 0,83% | 1% | 1,33% | 1,33% |
| Triethylenglykolmonobutylether | 3% | 3% | 3% | 3% | 3% | 3% | 10% | 10% |
| Polyethylenglykol ($\overline{MG}$ 400) | 5% | 5% | 5% | 5% | 5% | 5% | | |
| Harnstoff | 1% | 1% | 1% | 1% | 1% | 1% | | |
| Netzmittel | 0,5% | 0,5% | 0,5% | 0,5% | 0,5% | 0,5% | | |
| Triethanolamin | 0,04% | | | | | | | |
| Biozid A | | | | | | | 0,4% | 0,4% |
| Biozid B | | | | | | | 0,5% | 0,5% |
| Biozid C | 0,2% | 0,12% | 0,1% | 0,12% | 0,12% | 0,15% | | |
| Biozid D | | | | | | | | |
| Bindemittel | 15% | 15% | 15% | 15% | 15% | 15% | | |
| vollentsalztes Wasser | 55,93% | 57,55% | 58,73% | 57,55% | 57,55% | 56,35% | 79,77% | 79,77% |
| Gesamt | 100% | 100% | 100% | 100% | 100% | 100% | 100% | 100% |

Tabelle 1c

| | Zubereitung Nr. | | | | | | | |
|---|---|---|---|---|---|---|---|---|
| | 72 | 73 | 74 | 75 | 76 | 77 | 78 | 79 |
| C.I. Disperse Yellow 54 | 3% | | 0,925% | | | | | |
| C.I. Disperse Yellow 86 | | | | | | | | |
| C.I. Disperse Red 60 | | 3% | 0,925% | 2,7% | 2,7% | 2,7% | 2,7% | 2,7% |
| C.I. Disperse Red 11 | | | | | | | | |
| C.I. Disperse Red 86 | | | 3,75% | | | | | |
| C.I. Disperse Red 127 | | | | | | | | |
| C.I. Disperse Blue 72 | | | | | | | | |
| C.I. Disperse Blue 359 | | | | | | | | |
| C.I. Disperse Blue 332 | | | | | | | | |
| C.i. Disperse Blue 60 | | | | | | | | |
| C.I. Disperse Blue 77 | | | | | | | | |
| C.I. Solvent Yellow 163 | | | | | | | | |
| Dispergiermittel | 1,5% B1 | 3% B1 | 3,26% B1 | 2,7% B1 | 2,7% B1 | 2,7% B1 | 2,7% B1 | 2,7% B1 |
| Polytetrahydrofuran 250 | 3% | 5,5% | 5% | 5% | 3% | 5% | 4% | 6% |
| Glycerin | 20% | 20% | 13% | 14% | 14% | 12% | 11% | 6% |
| Sorbit | | | | | | | | |
| Triethylenglykolmonobutylether | | | | | | | | 3% |
| Polyethylenglykol ($\overline{MG}$ 400) | 5% | 5% | | | 2% | 2% | 4% | 4% |
| Harnstoff | | | | 1% | 1% | 1% | 1% | 1% |
| Netzmittel | 0,08% | 0,1% | 0,15% | 0,2% | 0,2% | 0,2% | 0,2% | 0,2% |
| Biozid D | 0,5% | 0,5% | 0,5% | 0,5% | 0,5% | 0,5% | 0,5% | 0,5% |
| vollentsalztes Wasser | 66,92% | 62,9% | 72,49% | 73,9% | 73,9% | 73,9% | 73,9% | 73,9% |
| Gesamt | 100% | 100% | 100% | 100% | 100% | 100% | 100% | 100% |

Tabelle 1c

| | Zubereitung Nr. | | | | | | | |
|---|---|---|---|---|---|---|---|---|
| | 80 | 81 | 82 | 83 | 84 | 85 | 86 | 87 |
| C.I. Disperse Yellow 54 | | | | | | | | |
| C.I. Disperse Yellow 86 | | | | | | | | |
| C.I. Disperse Red 60 | 2,7% | 2,7% | 2,7% | 2,7% | 2,7% | | | |
| C.I. Disperse Red 11 | | | | | | 2% | 2% | 2% |
| C.I. Disperse Red 86 | | | | | | | | |
| C.I. Disperse Red 127 | | | | | | | | |
| C.I. Disperse Blue 72 | | | | | | | | |
| C.I. Disperse Blue 359 | | | | | | | | |
| C.I. Disperse Blue 332 | | | | | | | | |
| C.i. Disperse Blue 60 | | | | | | | | |
| C.I. Disperse Blue 77 | | | | | | | | |
| C.I. Solvent Yellow 163 | | | | | | | | |
| Dispergiermittel | 2,7% B1 | 2,7% B1 | 2,7% B1 | 2,7% B1 | 2,7% B1 | 2% B1 | 2% B1 | 2% B1 |
| Polytetrahydrofuran 250 | 3% | 5% | 5% | 4% | 6% | 5% | 3% | 5% |
| Glycerin | | | | | | | | |
| Sorbit | 14% | 14% | 12% | 11% | 6% | 14% | 14% | 12% |
| Triethylenglykolmonobutylether | | | | | 3% | | | |
| Polyethylenglykol (MG 400) | 2% | | 2% | 4% | 4% | | 2% | 2% |
| Harnstoff | 1% | 1% | 1% | 1% | 1% | 1% | 1% | 1% |
| Netzmittel | 0,1% | 0,1% | 0,1% | 0,1% | 0,1% | 0,1% | 0,1% | 0,1% |
| Biozid D | 0,5% | 0,5% | 0,5% | 0,5% | 0,5% | 0,5% | 0,5% | 0,5% |
| vollentsalztes Wasser | 74% | 74% | 74% | 74% | 74% | 75,4% | 75,4% | 75,4% |
| Gesamt | 100% | 100% | 100% | 100% | 100% | 100% | 100% | 100% |

Tabelle 1c

| | Zubereitung Nr. | | | | | | | |
|---|---|---|---|---|---|---|---|---|
| | 88 | 89 | 90 | 91 | 92 | 93 | 94 | 95 |
| C.I. Disperse Yellow 54 | | | | | | | | |
| C.I. Disperse Yellow 86 | | | | | | | | |
| C.I. Disperse Red 60 | | | | | | | | |
| C.I. Disperse Red 11 | 2% | 2% | | | | | | |
| C.I. Disperse Red 86 | | | | | | | | |
| C.I. Disperse Red 127 | | | | | | | | |
| C.I. Disperse Blue 72 | | | 2,7% | | | | | |
| C.I. Disperse Blue 359 | | | | 3% | 3% | | | |
| C.I. Disperse Blue 332 | | | | | | 2% | 2% | |
| C.i. Disperse Blue 60 | | | | | | | | |
| C.I. Disperse Blue 77 | | | | | | | | |
| C.I. Solvent Yellow 163 | | | | | | | | 5% |
| Dispergiermittel | 2% B1 | 2% B1 | 1,35% B1 | 1,5% B1 | 1,5% B1 | 1% B1 | 1% B1 | 2,5% B1 |
| Polytetrahydrofuran 250 | 4% | 6% | 3% | 3% | 3% | 3% | 3% | 3% |
| Glycerin | 14% | 12% | | | 14% | | 14% | |
| Sorbit | | | 14% | 14% | | 14% | | 14% |
| Triethylenglykolmonobutylether | | 3% | | | | | | |
| Polyethylenglykol (MG 400) | 4% | 4% | 2% | 2% | 2% | 2% | 2% | 2% |
| Harnstoff | 1% | 1% | 1% | 1% | 1% | 1% | 1% | 1% |
| Netzmittel | 0,1% | 0,1% | 0,1% | 0,1% | 0,1% | 0,1% | 0,1% | 0,1% |
| Biozid D | 0,5% | 0,5% | 0,5% | 0,5% | 0,5% | 0,5% | 0,5% | 0,5% |
| vollentsalztes Wasser | 72,4% | 69,4% | 75,35% | 74,9% | 74,9% | 74,9% | 74,9% | 71,9% |
| Gesamt | 100% | 100% | 100% | 100% | 100% | 100% | 100% | 100% |

Tabelle 1c

| | Zubereitung Nr. | | | | | | | |
|---|---|---|---|---|---|---|---|---|
| | 96 | 97 | 98 | 99 | 100 | 101 | 102 | 103 |
| C.I. Disperse Yellow 54 | | | | | | | | |
| C.I. Disperse Yellow 86 | | | | 5% | | | | |
| C.I. Disperse Red 60 | | | | | | | | |
| C.I. Disperse Red 11 | | | | | | | | |
| C.I. Disperse Red 86 | | | 5% | | | | | |
| C.I. Disperse Red 127 | | | | | 5% | | | |
| C.I. Disperse Blue 72 | | | | | | | | |
| C.I. Disperse Blue 359 | | | | | | | | |
| C.I. Disperse Blue 332 | | | | | | | | |
| C.i. Disperse Blue 60 | 5% | | | | | | 5% | |
| C.I. Disperse Blue 77 | | 5% | | | | | | 5% |
| C.I. Solvent Yellow 163 | | | | | | 5 % | | |
| Dispergiermittel | 2,5% B1 | 2,5% B1 | 2,5% B1 | 2,5% B1 | 2,5% B1 | 2,5% B1 | 2,5% B1 | 2,5% B1 |
| Polytetrahydrofuran 250 | 3% | 3% | 3% | 3% | 3% | 3% | 3% | 3% |
| Glycerin | | | | | | 14 % | 14 % | 14 % |
| Sorbit | 14 % | 14% | 14% | 14% | 14% | | | |
| Triethylenglykolmonobutylether | | | | | | | | |
| Polyethylenglykol ($\overline{MG}$ 400) | 2% | 2% | 2% | 2% | 2% | 2% | 2% | 2% |
| Harnstoff | 1% | 1% | 1% | 1% | 1% | 1% | 1% | 1% |
| Netzmittel | 0,1% | 0,1 | 0,1% | 0,1% | 0,1% | 0,1% | 0,1% | 0,1% |
| Biozid D | 0,5% | 0,5% | 0,5% | 0,5% | 0,5% | 0,5% | 0,5% | 0,5% |
| vollentsalztes Wasser | 71,9% | 71,9% | 71,9% | 71,9% | 71,9% | 71,9% | 71,9% | 71,9% |
| Gesamt | 100% | 100% | 100% | 100% | 100% | 100% | 100% | 100% |

Tabelle 1c

| | Zubereitung Nr. | | |
|---|---|---|---|
| | 104 | 105 | 106 |
| C.I. Disperse Yellow 54 | | | |
| C.I. Disperse Yellow 86 | | 5% | |
| C.I. Disperse Red 60 | | | |
| C.I. Disperse Red 11 | | | |
| C.I. Disperse Red 86 | 5% | | |
| C.I. Disperse Red 127 | | | 5% |
| C.I. Disperse Blue 72 | | | |
| C.I. Disperse Blue 359 | | | |
| C.I. Disperse Blue 332 | | | |
| C.I. Disperse Blue 60 | | | |
| C.I. Disperse Blue 77 | | | |
| C.I. Solvent Yellow 163 | | | |
| Dispergiermittel | 2,5% B1 | 2,5% B1 | 2,5% B1 |
| Polytetrahydrofuran 250 | 3% | 3% | 3% |
| Glycerin | 14% | 14% | 14% |
| Sorbit | | | |
| Triethylenglykolmonobutylether | | | |
| Polyethylenglykol ($\overline{MG}$ 400) | 2% | 2% | 2% |
| Harnstoff | 1% | 1% | 1% |
| Netzmittel | 0,1% | 0,1% | 0,1% |
| Biozid D | 0,5% | 0,5% | 0,5% |
| vollentsalztes Wasser | 71,9% | 71,9% | 71,9% |
| Gesamt | 100% | 100% | 100% |

Beispiel 107

2,5 g eines 80 gew.-%igen wasserfeuchten Preßkuchens des Farbstoffs der Formel VII

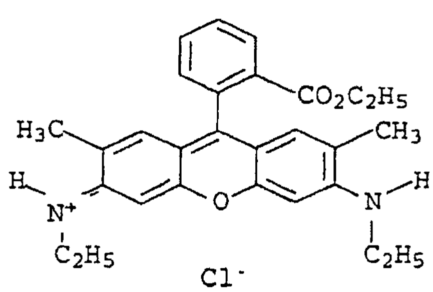

(VII)

wurden unter Rühren in 87,5 g Wasser gelöst und mit einem Filter MX 07 der Fa. Osmonics ultrafiltriert. Nach Zugabe von 8 g 1,2-Propylengylkol und 2 g Polytetrahydrofuran 250 wurde die Mischung mit einem Filter KS 80 der Fa. Seitz filtriert, um Schwebstoffe abzutrennen.

Beispiele 108 bis 123

Die Tinten der Beispiele 108 bis 123 wurden analog Beispiel 107 hergestellt.

Weitere Angaben zu den erhaltenen Tinten sind in Tabelle 2 zugsammengestellt. Bei den Prozentangaben handelt es sich jeweils um Gew.-%.

Tabelle 2

| | Zubereitung Nr. | | | | | | | |
|---|---|---|---|---|---|---|---|---|
| | 107 | 108 | 109 | 110 | 111 | 112 | 113 | 114 |
| Farbstoff der Formel (VII) | 2% | 2% | 2% | | | | | |
| C.I. Reactive Blue 72 | | | | 2% | 2% | 2% | | |
| C.I. Acid Yellow 5 | | | | | | | 3% | 3% |
| C.I. Reactive Red 187 | | | | | | | | |
| C.I. Acid Red 87 | | | | | | | | |
| C.I. Reactive Red 120 | | | | | | | | |
| Polytetrahydrofuran 250 | 2% | 2% | 2% | 2% | 2% | 2% | 2% | 2% |
| N-(2-Hydroxyethyl)pyrrolidon | | | 8 % | | | 8 % | | |
| 1,2-Propylenglykol | 8% | | | 8% | | | 8% | |
| Diethylenglykol | | 8% | | | 8% | | | 8% |
| vollentsalztes Wasser | 88% | 88% | 88% | 88% | 88% | 88% | 87% | 87% |
| Gesamt | 100% | 100% | 100% | 100% | 100% | 100% | 100% | 100% |

Tabelle 2

| | Zubereitung Nr. | | | | | | | | |
|---|---|---|---|---|---|---|---|---|---|
| | 115 | 116 | 117 | 118 | 119 | 120 | 121 | 122 | 123 |
| Farbstoff der Formel (VII) | | | | | | | | | |
| C.I. Reactive Blue 72 | | | | | | | | | |
| C.I. Acid Yellow 5 | 3% | | | | | | | | |
| C.I. Reactive Red 187 | | 2% | 2% | | | | | | |
| C.I. Acid Red 87 | | | | 2% | 2% | 2% | | | |
| C.I. Reactive Red 120 | | | | | | | 4% | 4% | 4% |
| Polytetrahydrofuran 250 | 2% | 2% | 2% | 2% | 2% | 2% | 2% | 2% | 2% |
| N-(2-Hydroxyethyl)pyrrolidon | 8% | | 8% | | | 8% | | | 8% |
| 1,2-Propylenglykol | | | | 8% | | | 8% | | |
| Diethylenglykol | | 8 % | | | 8% | | | 8 % | |
| vollentsalztes Wasser | 87% | 88% | 88% | 88% | 88% | 88% | 86% | 86% | 86% |
| Gesamt | 100% | 100% | 100% | 100% | 100% | 100% | 100% | 100% | 100% |

II) Prüfung erfindungsgemäßer Tinten

Alle Tinten zeigten beim Verdrucken mit handelsüblichen Ink-Jet-Druckern sowohl auf gestrichenem als auch auf ungestrichenem Papier ausgezeichnetes Anschreib- und Durchschreibverhalten und ergaben Drucke hoher Brillanz.

Die im Fall von Beispiel 24 bis 57 und 72 bis 80 wie folgt untersuchten physikalischen und drucktechnischen Eigenschaften sind in Tabelle 3 zusammengestellt:

1) Oberflächenspannung

Die Oberflächenspannung wurde mit dem Digital-Tensiometer K 10 der Fa. Krüss bestimmt. Die in Tabelle 3 angegebenen Werte sind die Mittelwerte aus 3 Messungen.

2) Viskosität

Die kinetische Viskosität wurde nach der Ubbelohde Methode (DIN 51662) bei 25°C (Beispiel 72 bis 74: 20°C) bestimmt.

3) pH-Wert

Der pH-Wert wurde mit einem pH-Meter 763 der Fa. Knick bestimmt.

Die drucktechnischen Eigenschaften wurden auf einem Ink-Jet-Drukker Mimaki JV2/130 untersucht.

4) Anschreibverhalten

Die Bewertung des Anschreibverhaltens erfolgte nach folgendem Bewertungssystem:

Note 1: Drucker schreibt nach 72 h mit allen Düsen an.

Note 2: Drucker schreibt nach 72 h nach Reinigung mit allen Düsen an.

Note 3: Drucker schreibt nach 72 h nach mehrfacher Reinigung mit allen Düsen an.

Note 4: Nach 72 h sind eine oder mehrere Düsen irreversibel verstopft.

5) Dauerschreibverhalten

Die Bewertung des Dauerschreibverhaltens erfolgte nach folgendem Bewertungssystem:

Note 1: 100 Seiten DIN A4-Format werden ohne Reinigung mit allen Düsen bedruckt.

Note 2: 100 Seiten DIN A4-Format werden ohne Reinigung mit maximal 4 fehlenden (verstopften) Düsen bedruckt.

Note 3: 100 Seiten DIN A4-Format werden mit zwischengeschalteter Reinigung mit allen Düsen bedruckt.

Note 4: Weniger als 100 Seiten DIN A4-Format werden mit zwischengeschalteter Reinigung mit allen Düsen bedruckt.

6) Trocknungsverhalten

Die Bewertung des Trocknungsverhaltens erfolgte visuell während des Druckens auf ein handelsübliches Premium Ink Jet Papier (Flächengewicht 140 $g/m^2$; Fa. Cham Tenero) nach folgendem Bewertungssystem:

Note 1: Der Druck ist während des Druckens von 10 Zeilen ohne Trocknungseinheit trocken.

Note 2: Der Druck ist beim Aufwickeln ohne Trocknungseinrichtung trocken.

Note 3: Der Druck ist beim Aufwickeln mit Trocknungseinrichtung trocken.

Note 4: Der Druck ist beim Aufwickeln trotz Trocknungseinrichtung nicht trocken.

Tabelle 3

| Zuber. Nr. | Oberflächen-Spannung [mN/m] | Viskosität [$mm^2/s$] | pH-Wert | Anschreibverhalten Note | Durchschreibverhalten Note | Trocknungsverhalten Note |
|---|---|---|---|---|---|---|
| 24 | 30,8 | 3,16 | 7,5 | 1 | 1 | 1 |
| 25 | 28,8 | 2,94 | 8,6 | 1 | 1 | 1 |
| 26 | 28,3 | 2,96 | 8,2 | 1 | 1 | 1 |
| 27 | 27,8 | 3,12 | 7,6 | 1 | 1 | 1 |
| 28 | 29,5 | 2,98 | 8,0 | 1 | 1 | 1 |
| 29 | 29,4 | 3,68 | 8,0 | 1 | 1 | 1 |
| 30 | 41,9 | 3,50 | 7,6 | 2 | 1 | 1 |
| 31 | 42,8 | 3,20 | 6,4 | 2 | 1 | 1 |
| 32 | 42,9 | 3,17 | 7,3 | 1 | 1 | 1 |
| 33 | 42,9 | 3,17 | 7,3 | 1 | 1 | 1 |
| 34 | 23,0 | 2,53 | 7,3 | 1 | 1 | 1 |
| 35 | 28,8 | 2,99 | 7,3 | 1 | 1 | 1 |
| 36 | 27,6 | 2,77 | 8,1 | 1 | 1 | 1 |
| 37 | 27,1 | 2,87 | 7,8 | 1 | 1 | 1 |
| 38 | 22,7 | 2,91 | 7,4 | 1 | 1 | 1 |
| 39 | 27,6 | 2,97 | 7,6 | 1 | 1 | 1 |
| 40 | 22,5 | 2,95 | 7,5 | 2 | 1 | 1 |
| 41 | 30,6 | 3,30 | 7,6 | 1 | 1 | 1 |
| 42 | 29,0 | 3,10 | 8,4 | 1 | 1 | 1 |
| 43 | 28,8 | 3,00 | 8,7 | 1 | 1 | 1 |
| 44 | 27,1 | 3,40 | 7,7 | 1 | 1 | 1 |
| 45 | 29,0 | 3,00 | 8,2 | 1 | 1 | 1 |
| 46 | 29,9 | 3,50 | 8,1 | 1 | 1 | 1 |
| 47 | 42,8 | 3,40 | 7,5 | 1 | 1 | 1 |

Tabelle 3 (fortgesetzt)

| Zuber. Nr. | Oberflächen-Spannung [mN/m] | Viskosität [$mm^2/s$] | pH-Wert | Anschreibverhalten Note | Durchschreibverhalten Note | Trocknungsverhalten Note |
|---|---|---|---|---|---|---|
| 48 | 42,1 | 3,10 | 6,5 | 1 | 2 | 1 |
| 49 | 42,5 | 3,30 | 7,4 | 2 | 1 | 1 |
| 50 | 41,5 | 3,20 | 7,2 | 2 | 1 | 1 |
| 51 | 23,2 | 2,53 | 7,4 | 1 | 1 | 1 |
| 52 | 28,5 | 2,96 | 7,5 | 2 | 1 | 1 |
| 53 | 27,7 | 2,68 | 8,0 | 2 | 1 | 1 |
| 54 | 27,3 | 2,65 | 7,9 | 1 | 1 | 1 |
| 55 | 22,3 | 2,79 | 7,3 | 1 | 2 | 1 |
| 56 | 27,3 | 2,89 | 7,8 | 1 | 1 | 1 |
| 57 | 22,8 | 2,91 | 7,3 | 1 | 1 | 2 |
| 72 | 29,2 | 3,93 | 8,4 | 1 | 1 | |
| 73 | 32,6 | 4,21 | 8,3 | 1 | 1 | |
| 74 | 31,6 | 4,23 | 8,2 | 1 | 1 | |
| 75 | 26,6 | 2,08 | 8,1 | 1 | 1 | |
| 76 | 26,5 | 2,17 | 8,3 | 2 | 1 | |
| 77 | 26,3 | 2,29 | 8,3 | 2 | 1 | |
| 78 | 26,6 | 2,30 | 8,0 | 3 | 1 | |
| 79 | 26,5 | 2,49 | 8,1 | 2 | 1 | |
| 80 | 26,8 | 1,84 | 8,2 | 1 | 1 | |

## Patentansprüche

1. Tinten für das Ink-Jet-Verfahren, enthaltend

   A) 0,01 bis 20 Gew.-% von mindestens einen dispergierten (A1) oder gelösten (A2) Farbmittel,

   B) im Fall eines Farbmittels (A1) ein Dispergiermittel,

   C) ein niedermolekulares Polytetrahydrofuran (C1), gewünschtenfalls im Gemisch mit einem oder mehreren schwerverdampfbaren, in Wasser löslichen oder mit Wasser mischbaren organischen Lösungsmitteln (C2) und

   D) Wasser

   als wesentliche Bestandteile.

2. Tinten für das Ink-Jet-Verfahren nach Anspruch 1, die, jeweils bezogen auf das Gewicht der Zubereitung,
   0,01 bis 20 Gew.-% der Komponente (A),
   für den Fall, daß das Farbmittel im wesentlichen ungelöst vorliegt, 0,01 bis 20 Gew.-% der Komponente (B),
   0,1 bis 40 Gew.-% der Komponente (C) und
   mindestens 50 Gew.-% der Komponente (D) enthalten.

3. Tinten für das Ink-Jet-Verfahren nach Anspruch 1 oder 2, die als Komponente (C1) ein oder mehrere Polytetrahydrofurane mit einem mittleren Molekulargewicht $M_w$ von 150 bis 500 g/mol enthalten.

4. Tinten für das Ink-Jet-Verfahren nach den Ansprüchen 1 bis 3, die 1 bis 10 Gew.-% der Komponente (C1) und 1 bis 30 Gew.-% der Komponente (C2) enthalten.

5. Tinten für das Ink-Jet-Verfahren nach den Ansprüchen 1 bis 4, die als Komponente (C2) ein oder mehrere Lösungsmittel aus der Gruppe mehrwertige Alkohole, Polyethylen- und Polypropylenglykole sowie deren Monoalkylether und Pyrrolidon und N-Alkylpyrrolidone enthalten.

6. Tinten für das Ink-Jet-Verfahren nach den Ansprüchen 1 bis 5, die als Komponente (C2), jeweils bezogen auf das Gewicht der Tinte, 1 bis 10 Gew.-% Glycerin, Sorbit und/oder Propylenglykol, 1 bis 10 Gew.-% Polyethylenglykol mit einem mittleren Molekulargewicht $M_w$ von 300 bis 500 g/mol und 1 bis 10 Gew.-% Di- und/oder Triethylenglykolmono-$C_1$-$C_4$-alkylether enthalten.

7. Tinten für das Ink-Jet-Verfahren nach den Ansprüchen 1 bis 6, die als Komponente (A) ein feinteiliges, organisches oder anorganisches Pigment enthalten.

8. Tinten für das Ink-Jet-Verfahren nach den Ansprüchen 1 bis 7, die als Komponente (B) ein Dispergiermittel auf der Basis von Arylsulfonsäure-Formaldehyd-Kondensationsprodukten (B1), von oxalkylierten Phenolen (B2), von Kondensationsprodukten eines mindestens difunktionellen Isocyanats mit jeweils eine isocyanatreaktive Gruppe tragenden Verbindungen (B3), von alkoxylierten Hydroxynaphthalinen (B4) oder von Alkoxylierungsprodukten mindestens bifunktioneller aliphatischer oder aromatischer Amine mit bis zu 8 Kohlenstoffatomen (B5) enthalten.

9. Tinten für das Ink-Jet-Verfahren nach den Ansprüchen 1 bis 8, die zusätzlich Harnstoff und ein Polyethersiloxan-Copolymer enthalten.

10. Tinten für das Ink-Jet-Verfahren nach den Ansprüchen 1 bis 9, die zusätzlich ein thermisch oder strahlungschemisch härtbares Bindemittel enthalten.

11. Verfahren zum Bedrucken von flächigen oder dreidimensional gestalteten Substraten im Ink-Jet-Verfahren, **dadurch gekennzeichnet, daß** man Tinten gemäß den Ansprüchen 1 bis 10 auf das Substrat aufdruckt und den erhaltenen Druck gewünschtenfalls anschließend fixiert.

## Claims

1. Ink-jet inks comprising

   A) from 0.01 to 20% by weight of at least one dispersed (A1) or dissolved (A2) colorant,

   B) a dispersant in the case of a colorant (A1),

   C) a low molecular weight polytetrahydrofuran (C1), if desired in mixture with one or more high-boiling water-soluble or -miscible organic solvents (C2), and

   D) water as essential constituents.

2. Ink-jet inks as claimed in claim 1, including, in each case based on the weight of the preparation,
   from 0.01 to 20% by weight of said component (A),
   from 0.01 to 20% by weight of said component (B) if the colorant is present in an essentially undissolved state,
   from 0.1 to 40% by weight of said component (C), and
   not less than 50% by weight of said component (D).

3. Ink-jet inks as claimed in claim 1 or 2, including as component (C1) one or more polytetrahydrofurans having an average molecular weight $M_w$ of from 150 to 500 g/mol.

4. Ink-jet inks as claimed in any of claims 1 to 3, including from 1 to 10% by weight of said component (C1 and from 1 to 30% by weight of said component (C2).

5. Ink-jet inks as claimed in any of claims 1 to 4, including as component (C2) one or more solvents selected from the group consisting of polyhydric alcohols, polyethylene glycols, polypropylene glycols, polyethylene glycol monoalkyl ethers, polypropylene glycol monoalkyl ethers, pyrrolidone and N-alkylpyrrolidones.

6. Ink-jet inks as claimed in any of claims 1 to 5, including as component (C2), in each case based on the weight of the ink, from 1 to 10% by weight of glycerol, sorbitol and/or propylene glycol, from 1 to 10% by weight of polyethylene glycol having an average molecular weight $M_w$ of from 300 to 500 g/mol and from 1 to 10% by weight of di- and/or triethylene glycol mono-$C_1$-$C_4$-alkyl ether.

7. Ink-jet inks as claimed in any of claims 1 to 6, including as component (A) a finely divided organic or inorganic pigment.

8. Ink-jet inks as claimed in any of claims 1 to 7, including as component (B) a dispersant based on arylsulfonic acid-formaldehyde condensation products (B1), on alkoxylated phenols (B2), on condensation products of an at least difunctional isocyanate with compounds (B3) each bearing one isocyanate-reactive group, on alkoxylated hydroxynaphthalenes (B4) or on alkoxylation products of at least difunctional aliphatic or aromatic amines having up to 8 carbon atoms (B5).

9. Ink-jet inks as claimed in any of claims 1 to 8, further comprising urea and a polyether siloxane copolymer.

10. Ink-jet inks as claimed in any of claims 1 to 9, further comprising a thermally or radiation-chemically curable binder.

11. A process for printing sheetlike or three-dimensionally configured substrates by the ink-jet process, which comprises printing inks as set forth in any of claims 1 to 10 onto the substrate and, if desired, subsequently fixing the print obtained.

## Revendications

1. Encres pour le procédé à jet d'encre, contenant

   A) 0,01 à 20 % en poids d'au moins un colorant dispersé (A1) ou dissous (A2),

B) dans le cas d'un colorant (A1 un agent dispersant,

C) un polytétrahydrofuranne de faible masse moléculaire (C1), si on le souhaite en mélange avec un ou plusieurs solvants organiques (C2) difficilement vaporisables, solubles dans l'eau ou miscibles avec l'eau, et

D) de l'eau,

comme composants essentiels.

**2.** Encres pour le procédé à jet d'encre selon la revendication 1, qui, à chaque fois par rapport au poids de la composition, contiennent
0,01 à 20 % en poids du composant (A),
dans le cas où le colorant est pour l'essentiel non dissous, 0,01 à 20 % en poids du composant (B),
0,01 à 40 % en poids du composant (C), et
au moins 50 % en poids du composant (D).

**3.** Encres pour le procédé à jet d'encre selon la revendication 1 ou 2, qui contiennent comme composant (C1) un ou plusieurs polytétrahydrofurannes ayant une masse moléculaire moyenne $M_w$ de 150 à 500 g/mol.

**4.** Encres pour le procédé à jet d'encre selon les revendications 1 à 3, qui contiennent 1 à 10 % en poids du composant (C1) et 1 à 30 % en poids du composant (C2).

**5.** Encres pour le procédé à jet d'encre selon les revendications 1 à 4, qui contiennent comme composant (C2) un ou plusieurs solvants choisis dans le groupe des alcools plurivalents, des polyéthylène- et polypropylèneglycols, ainsi que de leurs éthers monoalkyliques et de la pyrrolidone et des N-alkylpyrrolidones.

**6.** Encres pour le procédé à jet d'encre selon les revendications 1 à 5, qui contiennent comme composant (C2), à chaque fois par rapport au poids de l'encre, 1 à 10 % en poids de glycérine, de sorbitol et/ou de propylèneglycol, 1 à 10 % en poids de polyéthylèneglycol ayant une masse moléculaire moyenne $M_w$ de 300 à 500 g/mol et 1 à 10 % en poids d'éthers monoalkyliques en $C_1$-$C_4$ de di- et/ou triéthylèneglycol.

**7.** Encres pour le procédé à jet d'encre selon les revendications 1 à 6, qui contiennent comme composant (A) un pigment organique ou inorganique, finement divisé.

**8.** Encres pour le procédé à jet d'encre selon les revendications 1 à 7, qui contiennent comme composant (B) un agent dispersant à base de produits de condensation d'acide arylsulfonique-formaldéhyde (B1), de phénols oxyalkylés (B2), de produits de condensation d'un isocyanate au moins bifonctionnel avec des composés (B3) portant à chaque fois un groupe réactif avec les isocyanates, d'hydroxynaphtalènes alcoxylés (B4) ou de produits d'alcoxylation d'amines aliphatiques ou aromatiques au moins bifonctionnelles avec jusqu'à 8 atomes de carbone (B5).

**9.** Encres pour le procédé à jet d'encre selon les revendications 1 à 8, qui contiennent comme composant en outre de l'urée et un copolymère de polyéthersiloxane.

**10.** Encres pour le procédé à jet d'encre selon les revendications 1 à 9, qui contiennent comme composant en outre un liant durcissable par voie thermique ou par voie chimique sous rayonnement.

**11.** Procédé pour l'impression de substrats plats ou de forme tridimensionnelle dans le procédé à jet d'encre, **caractérisé par le fait qu'**on applique des encres selon les revendications 1 à 10 sur le substrat et on fixe ensuite si on le souhaite l'impression obtenue.